# EUROPEAN PATENT APPLICATION

(11) **EP 4 708 722 A1**
(43) Date of publication of application: **11.03.2026**
(21) Application number: 24824862.7
(22) Date of filing: 08.01.2024
(51) Int. Cl.: H04B 7/185

(54) **SATELLITE COMMUNICATION METHOD AND TERMINAL DEVICE**

(30) Priority: 19.06.2023 CN 202310734693
(71) Applicant: Huawei Technologies Co., Ltd., Shenzhen, Guangdong 518129 (CN)
(72) Inventor: ZHANG, Yunji, Shenzhen, Guangdong 518129 (CN)
(74) Representative: Isarpatent
(86) International application number: PCT/CN2024/071195
(87) International publication number: WO 2024/259958

(57) **Abstract**

A satellite communication method and a terminal device are provided, which relate to the field of communication technologies, to resolve a problem of how the terminal device communicates with a LEO satellite when using a directional antenna. The method may be applied to a terminal device including a first directional antenna and a second directional antenna. The first directional antenna corresponds to first coverage. The second directional antenna corresponds to second coverage. The method includes: The terminal device searches for at least one satellite in a first range by using a first antenna. The first antenna is the first directional antenna, and the first range is the first coverage; or the first antenna is the second directional antenna, and the first range is the second coverage; or the first antenna is the first directional antenna and the second directional antenna, and the first range is the first coverage and the second coverage.

## Description

This application claims priority to Chinese Patent Application No. 202310734693.6, filed with the China National Intellectual Property Administration on June 19, 2023 and entitled "SATELLITE COMMUNICATION METHOD AND TERMINAL DEVICE", which is incorporated herein by reference in its entirety.

### TECHNICAL FIELD

This application relates to the field of communication technologies, and in particular, to a satellite communication method and a terminal device.

### BACKGROUND

Currently, a terminal device may carry out some businesses, for example, sending an SMS message and making a call, via a low earth orbit (low earth orbit, LEO) satellite communication network. However, a LEO satellite is in high-speed motion. To synchronously track a beam of the LEO satellite for communication, the terminal device currently uses an omnidirectional antenna to perform a beam tracking operation.

However, quality of the LEO satellite communication network is poor due to limitations of LEO satellite deployment density, a LEO antenna, and the like. To optimize the quality of the LEO satellite communication network, the terminal device chooses to use a directional antenna. However, a solution to how the terminal device communicates with the LEO satellite when using the directional antenna is not yet proposed in the industry.

### SUMMARY

This application provides a satellite communication method and a terminal device, to resolve a problem of how the terminal device communicates with a LEO satellite when using a directional antenna.

The following technical solutions are used in this application, to achieve the foregoing objective.

According to a first aspect, a satellite communication method is provided, applied to a terminal device including a first directional antenna and a second directional antenna. The first directional antenna corresponds to first coverage. The second directional antenna corresponds to second coverage. The method includes: The terminal device searches for at least one first satellite in a first range by using a first antenna, where the first antenna is the first directional antenna, and the first range is the first coverage; or the first antenna is the second directional antenna, and the first range is the second coverage; or the first antenna is the first directional antenna and the second directional antenna, and the first range is the first coverage and the second coverage.

Based on the foregoing technical solution, when the terminal device includes the first directional antenna and the second directional antenna, namely, a plurality of directional antennas, the terminal device can search for a satellite in coverage of each directional antenna by using the first directional antenna and/or the second directional antenna, to communicate with the satellite. For example, the satellite may include but is not limited to a LEO satellite. This can resolve a problem of how the terminal device communicates with the LEO satellite when using the directional antenna.

In a possible design, the first antenna is the first directional antenna, and the first range is the first coverage. That the terminal device searches for the at least one satellite in the first range by using the first antenna includes: The terminal device obtains a location of the at least one first satellite; and when determining, based on the location of the at least one first satellite and a location of the terminal device, that the at least one first satellite is in the first coverage, the terminal device searches for the at least one first satellite by using the first directional antenna.

It may be understood that the location of the first satellite may be a location relative to the terminal device, namely, a location of the first satellite when the terminal device is at a location at a moment. The location of the at least one first satellite corresponds to the location of the terminal device. In other words, both the location of the at least one first satellite and the location of the terminal device are locations of the first satellite and the terminal device at a same moment. Optionally, the location of the at least one first satellite may be determined by the terminal device, or may be determined by another device and then sent to the terminal device.

Based on this design, after obtaining a location of the satellite, the terminal device determines, based on the location of the terminal device and the location of the satellite, which directional antenna has coverage that the satellite is in, and then searches for the satellite by using the directional antenna corresponding to the coverage that the satellite is in. In other words, a directional antenna corresponding to coverage that the satellite is not in is no longer used to search for the satellite. For example, when it is determined that the satellite is in the coverage of the first directional antenna, the first directional antenna is used to search for the satellite, and the second directional antenna is no longer used to search for the satellite. This can reduce power consumption of the terminal device when ensuring the communication with the satellite.

In a possible design, determining, based on the location of the at least one first satellite and the location of the terminal device, that the at least one first satellite is in the first coverage includes: The terminal device determines an elevation angle from the terminal device to the at least one first satellite based on the location of the at least one first satellite and the location of the terminal device; and when the elevation angle from the terminal device to the at least one first satellite is within the first coverage and is not within the second coverage, the terminal device determines that the at least one first satellite is in the first coverage. Based on this design, an elevation angle from the terminal device to the satellite can be determined based on the location of the terminal device and the location of the satellite, and then which directional antenna has coverage that the satellite is in can be determined based on the elevation angle from the terminal device to the satellite, thereby determining the coverage that the satellite is in.

In a possible design, the first antenna is the second directional antenna, and the first range is the second coverage. That the terminal device searches for the at least one first satellite in the first range by using the first antenna includes: The terminal device obtains a location of the at least one first satellite; and when determining, based on the location of the at least one first satellite and a location of the terminal device, that the at least one first satellite is in the second coverage, the terminal device searches for the at least one first satellite by using the second directional antenna.

Based on this design, after obtaining a location of the satellite, the terminal device determines, based on the location of the terminal device and the location of the satellite, which directional antenna has coverage that the satellite is in, and then searches for the satellite by using the directional antenna corresponding to the coverage that the satellite is in. In other words, a directional antenna corresponding to coverage that the satellite is not in is no longer used to search for the satellite. For example, when it is determined that the satellite is in the coverage of the second directional antenna, the second directional antenna is used to search for the satellite, and the first directional antenna is no longer used to search for the satellite. This can reduce power consumption of the terminal device when ensuring the communication with the satellite.

In a possible design, determining, based on the location of the at least one first satellite and the location of the terminal device, that the at least one first satellite is in the second coverage includes: The terminal device determines an elevation angle from the terminal device to the at least one first satellite based on the location of the at least one first satellite and the location of the terminal device; and when the elevation angle from the terminal device to the at least one first satellite is not within the first coverage and is within the second coverage, the terminal device determines that the at least one first satellite is in the second coverage. Based on this design, an elevation angle from the terminal device to the satellite can be determined based on the location of the terminal device and the location of the satellite, and then which directional antenna has coverage that the satellite is in can be determined based on the elevation angle from the terminal device to the satellite, thereby determining the coverage that the satellite is in.

In a possible design, the first antenna is the first directional antenna and the second directional antenna, and the first range is the first coverage and the second coverage. That the terminal device searches for the at least one first satellite in the first range by using the first antenna includes: The terminal device obtains a location of the at least one first satellite; and when determining, based on the location of the at least one first satellite and a location of the terminal device, that the at least one first satellite is in both the first coverage and the second coverage, the terminal device searches for the at least one first satellite by using both the first directional antenna and the second directional antenna.

Based on this design, after obtaining a location of the satellite, the terminal device determines, based on the location of the terminal device and the location of the satellite, which directional antenna has coverage that the satellite is in, and then searches for the satellite by using the directional antenna corresponding to the coverage that the satellite is in. When it is determined that the satellite is in all the coverage of the plurality of directional antennas (for example, the first directional antenna and the second directional antenna), all the plurality of directional antennas are used to search for the satellite. This can improve satellite search efficiency and accuracy when ensuring the communication with the satellite.

In a possible design, determining, based on the location of the at least one first satellite and the location of the terminal device, that the at least one first satellite is in both the first coverage and the second coverage includes: The terminal device determines an elevation angle from the terminal device to the at least one first satellite based on the location of the at least one first satellite and the location of the terminal device; and when the elevation angle from the terminal device to the at least one first satellite is within the first coverage and is within the second coverage, the terminal device determines that the at least one first satellite is in both the first coverage and the second coverage. Based on this design, an elevation angle from the terminal device to the satellite can be determined based on the location of the terminal device and the location of the satellite, and then which directional antenna has coverage that the satellite is in can be determined based on the elevation angle from the terminal device to the satellite, thereby determining the coverage that the satellite is in.

In a possible design, that the terminal device obtains the location of the at least one first satellite includes: The terminal device obtains an ephemeris of the at least one first satellite; and the terminal device determines the location of the at least one first satellite based on the location of the terminal device, a time for the location of the terminal device, and the ephemeris of the at least one first satellite.

It may be understood that the location of the terminal device may be a location of the terminal device at a time, and the time corresponding to the location of the terminal device may be the time.

Based on this design, the terminal device can determine the location of the first satellite when the terminal device is at a location at a moment based on the ephemeris of the first satellite, the location of the terminal device, and the time corresponding to the location of the terminal device. Then, which directional antenna has coverage that the first satellite is in can be determined based on the location of the first satellite, thereby determining the coverage that the satellite is in.

In a possible design, after the terminal device searches for the at least one first satellite in the first range by using the first antenna, the method further includes: The terminal device determines a first to-be-camped satellite based on a preset camping condition, where the first to-be-camped satellite is one satellite in the at least one first satellite; and the terminal device communicates with the first to-be-camped satellite by using the first directional antenna and/or the second directional antenna. For example, the preset camping condition may be determined based on one or more of service duration of the satellite, a system message of the satellite, and signal strength of the satellite.

Based on this design, when finding one or more satellites, the terminal device can determine a to-be-camped satellite based on the preset camping condition, thereby determining the to-be-camped satellite. Then, the first directional antenna and/or the second directional antenna are/is used to communicate with the to-be-camped satellite. For example, the to-be-camped satellite may include but is not limited to the LEO satellite. This can resolve the problem of how the terminal device communicates with the LEO satellite when using the directional antenna.

In a possible design, that the terminal device communicates with the first to-be-camped satellite by using the first directional antenna and/or the second directional antenna includes: The terminal device separately receives signals from a plurality of beams of the first to-be-camped satellite by using the first directional antenna and the second directional antenna; the terminal device determines received signal quality, where the received signal quality is quality of the signals separately received by the first directional antenna and the second directional antenna from the plurality of beams of the first to-be-camped satellite; the terminal device determines a second antenna and a first beam based on the received signal quality, where the second antenna is one or more of the first directional antenna and the second directional antenna, and the first beam is one or more of the plurality of beams of the first to-be-camped satellite; and the terminal device communicates with the first beam by using the second antenna.

Based on this design, the terminal device simultaneously receives signals from a plurality of beams of the to-be-camped satellite by using the first directional antenna and the second directional antenna, that is, measures the beams of the to-be-camped satellite, and then determines, based on quality of signals received by each directional antenna from the plurality of beams of the to-be-camped satellite, which directional antenna is finally used to communicate with a beam of the to-be-camped satellite, thereby implementing beam tracking of the to-be-camped satellite. When ensuring the communication with the to-be-camped satellite, this can make the terminal device obtain better quality of service of the to-be-camped satellite.

In a possible design, quality of a signal received by the second antenna from the first beam meets a preset quality condition, and the preset quality condition includes optimal received signal quality. Based on this design, a directional antenna corresponding to the optimal received signal quality is used to communicate with a corresponding beam. This can ensure that the directional antenna used by the terminal device and the corresponding beam of the satellite are a communication link with optimal communication quality, thereby ensuring good communication quality between the terminal device and the satellite.

In a possible design, the second antenna includes the first directional antenna and the second directional antenna, a difference between quality of a signal received by the first directional antenna from the first beam and quality of a signal received by the second directional antenna from the first beam is less than or equal to a preset threshold, and the quality of the signal received by the first directional antenna or the second directional antenna from the first beam meets the preset quality condition.

Based on this design, for a same beam, when a difference between quality of signals received by two directional antennas from the beam is less than or equal to the preset threshold, both the two directional antennas are used to communicate with the beam. This can improve quality of a signal received by the terminal device from the satellite. In addition, quality of a signal received by one of the two directional antennas from the beam is optimal. This can ensure that the directional antenna used by the terminal device and the corresponding beam of the satellite are a communication link with the optimal communication quality, thereby ensuring good communication quality between the terminal device and the satellite.

In a possible design, that the terminal device communicates with the first beam by using the second antenna includes: The terminal device simultaneously receives the signals from the first beam by using the first directional antenna and the second directional antenna. Based on this design, the terminal device receives the signals of the same beam by using all the plurality of directional antennas. This can improve the quality of the signal received by the terminal device from the satellite.

In a possible design, after the terminal device communicates with the first to-be-camped satellite by using the first directional antenna and/or the second directional antenna, the method further includes: The terminal device searches for at least one second satellite in a second range by using a third antenna, where the third antenna is the first directional antenna, and the second range is the first coverage; or the third antenna is the second directional antenna, and the second range is the second coverage; or the third antenna is the first directional antenna and the second directional antenna, and the second range is the first coverage and the second coverage.

Optionally, the at least one second satellite and the at least one first satellite may or may not include a same satellite.

Based on this design, during a satellite handover, the terminal device can search for a to-be-handed-over-to satellite in the coverage of each directional antenna by using the first directional antenna and/or the second directional antenna, to communicate with the satellite in a handover scenario. This can resolve the problem of how the terminal device communicates with the satellite when using the directional antenna.

In a possible design, when the at least one second satellite is in the first coverage, the third antenna is the first directional antenna, and the second range is the first coverage; or when the at least one second satellite is in the second coverage, the third antenna is the second directional antenna, and the second range is the second coverage; or when the at least one second satellite is in both the first coverage and the second coverage, the third antenna is the first directional antenna and the second directional antenna, and the second range is the first coverage and the second coverage.

Based on this design, after it is determined which directional antenna has coverage that the satellite is in, the satellite is searched for by using the directional antenna corresponding to the coverage that the satellite is in. In other words, the directional antenna corresponding to the coverage that the satellite is not in is no longer used to search for the satellite. This can reduce the power consumption of the terminal device when ensuring the communication with the satellite. In addition, when it is determined that the satellite is in all the coverage of the plurality of directional antennas (for example, the first directional antenna and the second directional antenna), all the plurality of directional antennas are used to search for the satellite. This can improve the satellite search efficiency and accuracy when ensuring the communication with the satellite.

In a possible design, after the terminal device searches for the at least one second satellite in the second range by using the third antenna, the method further includes: The terminal device determines a second to-be-camped satellite based on the preset camping condition, where the second to-be-camped satellite is one satellite in the at least one second satellite. Based on this design, the terminal device determines a new to-be-camped satellite based on the preset camping condition, thereby ensuring that the terminal device can obtain a service provided by the new to-be-camped satellite.

In a possible design, after the terminal device determines the second to-be-camped satellite based on the preset camping condition, the method further includes: The terminal device receives signals from a plurality of beams of the second to-be-camped satellite by using the first directional antenna and/or the second directional antenna. Based on this design, the terminal device determines the new to-be-camped satellite based on the preset camping condition, and then communicates with the new to-be-camped satellite by using the first directional antenna and/or the second directional antenna. This implements the communication between the terminal device and the new to-be-camped satellite in the handover scenario. For example, the new to-be-camped satellite may include but is not limited to the LEO satellite. This can resolve the problem of how the terminal device communicates with the LEO satellite when using the directional antenna.

In a possible design, that the terminal device receives the signals from the plurality of beams of the second to-be-camped satellite by using the first directional antenna and/or the second directional antenna includes: When the terminal device determines that directional antennas corresponding to the first to-be-camped satellite and the second to-be-camped satellite are different, the terminal device communicates with the first to-be-camped satellite by using the directional antenna corresponding to the first to-be-camped satellite, and receives the signals from the plurality of beams of the second to-be-camped satellite by using the directional antenna corresponding to the second to-be-camped satellite, where the directional antenna corresponding to the first to-be-camped satellite is the first directional antenna, and the directional antenna corresponding to the second to-be-camped satellite is the second directional antenna; or the directional antenna corresponding to the first to-be-camped satellite is the second directional antenna, and the directional antenna corresponding to the second to-be-camped satellite is the first directional antenna.

Based on this design, if directional antennas corresponding to a source satellite and the new to-be-camped satellite are different, the terminal device communicates with the source satellite by using the directional antenna corresponding to the source satellite, for example, receives and sends business data. The directional antenna corresponding to the new to-be-camped satellite is used to receive a signal from a beam of the new to-be-camped satellite, for example, performs beam measurement. In other words, the terminal device can separately receive and send the business data and perform the beam measurement by using different directional antennas. This can reduce a probability that a business is interrupted or affected, and ensure that the business on the terminal device can obtain good quality of service.

In a possible design, that the terminal device receives the signals from the plurality of beams of the second to-be-camped satellite by using the first directional antenna and/or the second directional antenna includes: When the terminal device determines that the first to-be-camped satellite and the second to-be-camped satellite correspond to a same directional antenna, the terminal device receives the signals from the plurality of beams of the second to-be-camped satellite by using the first directional antenna and the second directional antenna, where both a directional antenna corresponding to the first to-be-camped satellite and a directional antenna corresponding to the second to-be-camped satellite include the first directional antenna and/or the second directional antenna.

It may be understood that, that the first to-be-camped satellite and the second to-be-camped satellite correspond to the same directional antenna may include that directional antennas corresponding to the first to-be-camped satellite and the second to-be-camped satellite are completely the same or partially the same.

Based on this design, if a source satellite and the new to-be-camped satellite correspond to a same directional antenna, the terminal device receives signals from the new to-be-camped satellite by using all the plurality of directional antennas, that is, performs beam measurement. The plurality of directional antennas may include a directional antenna that is the same as that of the source satellite, and may further include a directional antenna that is different from that of the source satellite. This can improve accuracy of an obtained beam measurement result when implementing the communication with the new to-be-camped satellite.

In a possible design, the first coverage is coverage corresponding to the first directional antenna when the terminal device is in a current posture; and the second coverage is coverage corresponding to the second directional antenna when the terminal device is in the current posture. Based on this design, the coverage of the directional antenna may vary when the terminal device is in different postures. Therefore, the coverage of the directional antenna is coverage corresponding to the current posture of the terminal device, and more accurate coverage of the directional antenna can be obtained. Then, when the directional antenna is used to communicate with the satellite in the more accurate coverage, better communication quality with the satellite can be obtained.

According to a second aspect, a terminal device is provided. The terminal device includes a first directional antenna and a second directional antenna. The first directional antenna corresponds to first coverage. The second directional antenna corresponds to second coverage. The terminal device has a function of implementing the method according to any one of the first aspect and the designs of the first aspect. The function may be implemented by hardware, or may be implemented by hardware executing corresponding software. The hardware or the software includes one or more modules corresponding to the function. In a possible example, the terminal device includes a processing unit (or referred to as a processing module). The processing unit is configured to search for at least one first satellite in a first range by using a first antenna, where the first antenna is the first directional antenna, and the first range is the first coverage; or the first antenna is the second directional antenna, and the first range is the second coverage; or the first antenna is the first directional antenna and the second directional antenna, and the first range is the first coverage and the second coverage.

In a possible design, the first antenna is the first directional antenna, and the first range is the first coverage. The processing unit is further configured to obtain a location of the at least one first satellite. When it is determined, based on the location of the at least one first satellite and a location of the terminal device, that the at least one first satellite is in the first coverage, the processing unit is specifically configured to search for the at least one first satellite by using the first directional antenna.

In a possible design, the processing unit is further configured to determine an elevation angle from the terminal device to the at least one first satellite based on the location of the at least one first satellite and the location of the terminal device. When the elevation angle from the terminal device to the at least one first satellite is within the first coverage and is not within the second coverage, the processing unit is further configured to determine that the at least one first satellite is in the first coverage.

In a possible design, the first antenna is the second directional antenna, and the first range is the second coverage. The processing unit is further configured to obtain a location of the at least one first satellite. When it is determined, based on the location of the at least one first satellite and a location of the terminal device, that the at least one first satellite is in the second coverage, the processing unit is specifically configured to search for the at least one first satellite by using the second directional antenna.

In a possible design, the processing unit is further configured to determine an elevation angle from the terminal device to the at least one first satellite based on the location of the at least one first satellite and the location of the terminal device. When the elevation angle from the terminal device to the at least one first satellite is not within the first coverage and is within the second coverage, the processing unit is further configured to determine that the at least one first satellite is in the second coverage.

In a possible design, the first antenna is the first directional antenna and the second directional antenna, and the first range is the first coverage and the second coverage. The processing unit is further configured to obtain a location of the at least one first satellite. When it is determined, based on the location of the at least one first satellite and a location of the terminal device, that the at least one first satellite is in both the first coverage and the second coverage, the processing unit is further configured to search for the at least one first satellite by using both the first directional antenna and the second directional antenna.

In a possible design, the processing unit is further configured to determine an elevation angle from the terminal device to the at least one first satellite based on the location of the at least one first satellite and the location of the terminal device. When the elevation angle from the terminal device to the at least one first satellite is within the first coverage and is within the second coverage, the processing unit is further configured to determine that the at least one first satellite is in both the first coverage and the second coverage.

In a possible design, the processing unit is further configured to obtain an ephemeris of the at least one first satellite. The processing unit is further configured to determine the location of the at least one first satellite based on the location of the terminal device, a time for the location of the terminal device, and the ephemeris of the at least one first satellite.

In a possible design, the processing unit is further configured to determine a first to-be-camped satellite based on a preset camping condition, where the first to-be-camped satellite is one satellite in the at least one first satellite. The processing unit is further configured to communicate with the first to-be-camped satellite by using the first directional antenna and/or the second directional antenna.

In a possible design, the processing unit is further configured to separately receive signals from a plurality of beams of the first to-be-camped satellite by using the first directional antenna and the second directional antenna. The processing unit is further configured to determine received signal quality, where the received signal quality is quality of the signals separately received by the first directional antenna and the second directional antenna from the plurality of beams of the first to-be-camped satellite. The processing unit is further configured to determine a second antenna and a first beam based on the received signal quality, where the second antenna is one or more of the first directional antenna and the second directional antenna, and the first beam is one or more of the plurality of beams of the first to-be-camped satellite. The processing unit is further configured to communicate with the first beam by using the second antenna.

In a possible design, quality of a signal received by the second antenna from the first beam meets a preset quality condition, and the preset quality condition includes optimal received signal quality.

In a possible design, the second antenna includes the first directional antenna and the second directional antenna, a difference between quality of a signal received by the first directional antenna from the first beam and quality of a signal received by the second directional antenna from the first beam is less than or equal to a preset threshold, and the quality of the signal received by the first directional antenna or the second directional antenna from the first beam meets the preset quality condition.

In a possible design, the processing unit is specifically configured to simultaneously receive the signals from the first beam by using the first directional antenna and the second directional antenna.

In a possible design, the processing unit is further configured to search for at least one second satellite in a second range by using a third antenna, where the third antenna is the first directional antenna, and the second range is the first coverage; or the third antenna is the second directional antenna, and the second range is the second coverage; or the third antenna is the first directional antenna and the second directional antenna, and the second range is the first coverage and the second coverage.

In a possible design, when the at least one second satellite is in the first coverage, the third antenna is the first directional antenna, and the second range is the first coverage; or when the at least one second satellite is in the second coverage, the third antenna is the second directional antenna, and the second range is the second coverage; or when the at least one second satellite is in both the first coverage and the second coverage, the third antenna is the first directional antenna and the second directional antenna, and the second range is the first coverage and the second coverage.

In a possible design, the processing unit is further configured to determine a second to-be-camped satellite based on the preset camping condition, where the second to-be-camped satellite is one satellite in the at least one second satellite.

In a possible design, the processing unit is further configured to receive signals from a plurality of beams of the second to-be-camped satellite by using the first directional antenna and/or the second directional antenna.

In a possible design, the processing unit is further configured to: when it is determined that directional antennas corresponding to the first to-be-camped satellite and the second to-be-camped satellite are different, communicate with the first to-be-camped satellite by using the directional antenna corresponding to the first to-be-camped satellite, and receive the signals from the plurality of beams of the second to-be-camped satellite by using the directional antenna corresponding to the second to-be-camped satellite, where the directional antenna corresponding to the first to-be-camped satellite is the first directional antenna, and the directional antenna corresponding to the second to-be-camped satellite is the second directional antenna; or the directional antenna corresponding to the first to-be-camped satellite is the second directional antenna, and the directional antenna corresponding to the second to-be-camped satellite is the first directional antenna.

In a possible design, the processing unit is further configured to: when it is determined that the first to-be-camped satellite and the second to-be-camped satellite correspond to a same directional antenna, receive the signals from the plurality of beams of the second to-be-camped satellite by using the first directional antenna and the second directional antenna, where both a directional antenna corresponding to the first to-be-camped satellite and a directional antenna corresponding to the second to-be-camped satellite include the first directional antenna and/or the second directional antenna.

In a possible design, the first coverage is coverage corresponding to the first directional antenna when the terminal device is in a current posture; and the second coverage is coverage corresponding to the second directional antenna when the terminal device is in the current posture.

In a possible design, the terminal device further includes a communication unit. The communication unit is configured to communicate with another device (for example, a satellite).

According to a third aspect, a terminal device is provided, including a processor, a memory, and a communication interface. The memory and the communication interface are coupled to the processor. The communication interface is configured to communicate with another device. The memory is configured to store program code. The program code includes instructions. The processor reads the instructions from the memory, to enable the terminal device to perform the method according to any one of the first aspect and the designs of the first aspect.

Optionally, the memory may be coupled to the processor, or may be independent of the processor. For example, the communication interface may be a transceiver, an input/output interface, an interface circuit, an output circuit, an input circuit, a pin, or a related circuit.

In a possible design, the terminal device may further include a plurality of directional antennas. The plurality of directional antennas may correspond to different coverage. Optionally, the plurality of directional antennas may be integrated into the communication interface, or may be disposed separately from the communication interface.

According to a fourth aspect, a computer-readable storage medium is provided. The computer-readable storage medium includes a computer program. When the computer program is run on a terminal device, the terminal device is enabled to perform the method according to any one of the first aspect and the designs of the first aspect.

According to a fifth aspect, a computer program product is provided. The computer program product includes a computer program or instructions. When the computer program or the instructions are run on a computer, the computer is enabled to perform the method according to any one of the first aspect and the designs of the first aspect.

According to a sixth aspect, a chip system is provided, including at least one processor and at least one interface circuit. The at least one interface circuit is configured to: perform a transceiver function, and send instructions to the at least one processor. When the at least one processor executes the instructions, the at least one processor performs the method according to any one of the first aspect and the designs of the first aspect.

According to a seventh aspect, this application provides a communication system, including a terminal device and a network device. For example, the network device may include but is not limited to a satellite. The terminal device and the network device implement the method according to any one of the designs of the foregoing aspects through cooperation.

It should be noted that, for technical effect brought by any one of the designs of the second aspect to the seventh aspect, refer to technical effect brought by a corresponding design of the first aspect. Details are not described herein again.

### BRIEF DESCRIPTION OF DRAWINGS

FIG. 1 is a diagram of an elevation angle according to an embodiment of this application;
FIG. 2 is a diagram of an architecture of a communication system according to an embodiment of this application;
FIG. 3a is a diagram of a structure of a terminal device according to an embodiment of this application;
FIG. 3b is a diagram of a scenario of coverage of a directional antenna according to an embodiment of this application;
FIG. 4 is a diagram of a structure of another terminal device according to an embodiment of this application;
FIG. 5 is a schematic flowchart of a satellite communication method according to an embodiment of this application;
FIG. 6 is a diagram of another scenario of coverage of a directional antenna according to an embodiment of this application;
FIG. 7(1) to FIG. 7(3) are a diagram of a scenario in which a satellite is in coverage of a directional antenna according to an embodiment of this application;
FIG. 8a(1) to FIG. 8a(3) are a diagram of another scenario in which a satellite is in coverage of a directional antenna according to an embodiment of this application;
FIG. 8b is a diagram of an interface according to an embodiment of this application;
FIG. 9a is a diagram of a scenario of beam tracking according to an embodiment of this application;
FIG. 9b is a schematic flowchart of another satellite communication method according to an embodiment of this application;
FIG. 10a is a diagram of a scenario of a satellite handover according to an embodiment of this application;
FIG. 10b is a schematic flowchart of another satellite communication method according to an embodiment of this application;
FIG. 11 is a diagram of a structure of another terminal device according to an embodiment of this application; and
FIG. 12 is a diagram of a structure of a chip system according to an embodiment of this application.

### DESCRIPTION OF EMBODIMENTS

In descriptions of this application, unless otherwise specified, "/" indicates that associated objects are in an "or" relationship. For example, A/B may indicate A or B. In this application, "and/or" describes merely an association relationship between associated objects, and indicates that three relationships may exist. For example, A and/or B may indicate the following three cases: Only A exists, both A and B exist, and only B exists, where A and B may be singular or plural.

In the descriptions of this application, "a plurality of" means two or more unless otherwise specified. "At least one of the following items (pieces)" or a similar expression thereof means any combination of these items, including a single item (piece) or any combination of a plurality of items (pieces). For example, at least one of a, b, or c may indicate a, b, c, a and b, a and c, b and c, and a and b and c, where a, b, and c may be singular or plural.

In addition, to clearly describe technical solutions in embodiments of this application, terms such as "first" and "second" are used in embodiments of this application to distinguish between same items or similar items that provide basically the same functions or purposes. A person skilled in the art may understand that the terms such as "first" and "second" do not limit a quantity and an execution sequence, and the terms such as "first" and "second" do not indicate a definite difference.

In embodiments of this application, a term like "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term like "example" or "for example" is intended to present a related concept in a specific manner for ease of understanding.

Features, structures, or characteristics in this application may be combined in one or more embodiments in any appropriate manner. Sequence numbers of the processes do not mean execution sequences in embodiments of this application. The execution sequences of the processes should be determined based on functions and internal logic of the processes, and should not be construed as any limitation on implementation processes of embodiments of this application.

In some scenarios, some optional features in embodiments of this application may be independently implemented without depending on another feature, to resolve a corresponding technical problem and achieve corresponding effect. Alternatively, in some scenarios, the optional features may be combined with another feature based on a requirement.

In this application, unless otherwise specified, for same or similar parts in embodiments, refer to each other. In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. Implementations of this application are not intended to limit the protection scope of this application.

In addition, a network architecture and a business scenario described in embodiments of this application are intended to describe the technical solutions in embodiments of this application more clearly, and do not constitute a limitation on the technical solutions provided in embodiments of this application. A person of ordinary skill in the art may learn that, with evolution of the network architecture and emergence of a new business scenario, the technical solutions provided in embodiments of this application are also applicable to similar technical problems.

For ease of understanding, the following first describes technical terms and related concepts that may be used in embodiments of this application.

### 1. Satellite communication network

The satellite communication network is one of non-terrestrial networks (non-terrestrial networks, NTNs). The satellite communication network may be a network in which a base station or a part of base station functions are deployed on a satellite to provide communication for a terminal device.

Based on a satellite altitude, namely, a satellite orbital altitude, the satellite communication network may be classified into a highly elliptical orbit (highly elliptical orbit, HEO) satellite communication network, a geostationary earth orbit (geostationary earth orbit, GEO) satellite communication network, a medium earth orbit (medium earth orbit, MEO) satellite communication network, a low earth orbit (low earth orbit, LEO) satellite communication network, and the like.

### 2. Omnidirectional antenna and directional antenna

An antenna has different transmit or receive capabilities in different directions of space, which is referred to as directionality of the antenna. Based on the directionality of the antenna, the antenna may be classified into two types, for example, the directional antenna and the omnidirectional antenna. The directional antenna is an antenna that transmits and/or receives stronger electromagnetic waves in one or several specific directions, and transmits and/or receives no electromagnetic wave or extremely weak electromagnetic waves in another direction. The directional antenna radiates in a specific angle range in a horizontal radiation pattern. The omnidirectional antenna is an antenna that transmits and/or receives uniform electromagnetic waves in all directions. The omnidirectional antenna radiates uniformly at 360 degrees in the horizontal radiation pattern.

### 3. Phased array antenna

An antenna array may be a group of antennas including two or more antennas. The phased array antenna is an antenna array having an electronic steering function, where an antenna does not require any physical movement, and a phase difference between radiated signals of antennas in the antenna array is controlled, so that a direction and a shape of the radiated signal can be changed. In some embodiments of this application, the phased array antenna may be used as a directional antenna.

### 4. Beam

The beam is a communication resource. The beam may be a wide beam, a narrow beam, or another type of beam. A technology for forming the beam may be a beamforming technology or another technical means. Different beams may be considered as different resources. Same information or different information may be sent via different beams.

In some embodiments of this application, a satellite may provide a wireless communication service for a terminal device via the beam.

### 5. Ephemeris

The ephemeris is information for describing a satellite motion orbit, and may be a group of orbit parameters corresponding to a moment. A location and a velocity of a satellite at any moment may be determined via the ephemeris.

### 6. Elevation angle of a satellite (or referred to as an elevation angle of a satellite antenna)

In some embodiments, when a projection of a connection line between the satellite and a target onto a horizontal plane (or referred to as a ground plane) that the target is on is a straight line, the elevation angle of the satellite may be an included angle between the connection line between the satellite and the target and a straight line that the projection of the connection line between the satellite and the target onto the horizontal plane that the target is on is on. It may be understood that, in embodiments of this application, the connection line between the satellite and the target is a straight line.

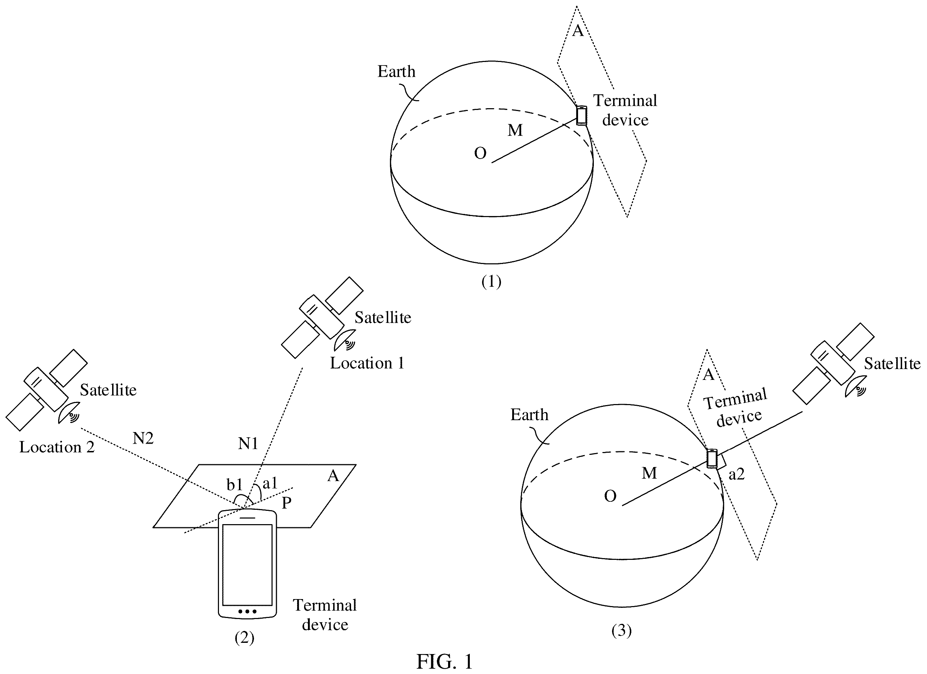

It may be understood that the horizontal plane that the target is on may be a plane perpendicular to a connection line between a sphere center of the earth and the target. For example, (1) in FIG. 1 is a diagram of a horizontal plane that a terminal device is on according to an embodiment of this application. As shown in (1) in FIG. 1, the horizontal plane that the terminal device is on is a plane A, where the plane A is perpendicular to a connection line M between a sphere center O of the earth and the terminal device.

For example, the target is the terminal device. (2) in FIG. 1 is a diagram of an elevation angle of a satellite according to an embodiment of this application. As shown in (2) in FIG. 1, the horizontal plane that the terminal device is on is the plane A. When the satellite is at a location 1, a straight line that a projection of a connection line N1 between the terminal device and the satellite onto the plane A is on is a straight line P. An included angle a1 between the connection line N1 and the straight line P is an elevation angle from the terminal device to the satellite, and a1 is less than 90 degrees; or a supplementary angle of the included angle a1 is an elevation angle from the terminal device to the satellite, and the supplementary angle of the included angle a1 is greater than 90 degrees. When the satellite is at a location 2, a straight line that a projection of a connection line N2 between the terminal device and the satellite onto the plane A is on is also the straight line P. An included angle b1 between the connection line N2 and the straight line P may be an elevation angle from the terminal device to the satellite, and b1 is greater than 90 degrees; or a supplementary angle of the included angle b1 is an elevation angle from the terminal device to the satellite, and the supplementary angle of the included angle b1 is less than 90 degrees.

Optionally, the elevation angle from the terminal device to the satellite may be greater than or equal to 0 degrees and less than or equal to 180 degrees, or may be greater than or equal to 0 degrees and less than or equal to 90 degrees.

It may be understood that, in (2) in FIG. 1, an example in which the projection of the connection line between the satellite and the target onto the horizontal plane that the target is on is a straight line is used, and the projection of the connection line between the satellite and the target onto the horizontal plane that the target is on may alternatively be a point. For example, the target is still the terminal device. (3) in FIG. 1 is a diagram of another elevation angle of a satellite according to an embodiment of this application. As shown in (3) in FIG. 1, a plane A is perpendicular to a connection line M between a sphere center O of the earth and the terminal device, and therefore the plane A is a horizontal plane that the terminal device is on. A connection line between the satellite and the terminal device is also the straight line M, that is, the satellite, the terminal device, and the sphere center of the earth are on a same straight line. In this case, a projection of the connection line M between the satellite to the terminal device onto the plane A is a point, an included angle a2 between the connection line M and the plane A is an elevation angle from the terminal device to the satellite, and the included angle a2 is 90 degrees.

Therefore, in some other embodiments, when the projection of the connection line between the satellite and the target onto the horizontal plane that the target is on is a point, the elevation angle of the satellite may be an included angle between the horizontal plane that the target is on and the connection line between the satellite and the target and, or the elevation angle of the satellite is 90 degrees.

In some embodiments of this application, the elevation angle from the terminal device to the satellite may be used to describe a location that is above the terminal device and that the satellite passes through at a moment. For example, a parameter for determining an elevation angle from the terminal device to the satellite at a moment may include one or more of a location of the terminal device and a location of the satellite.

In some scenarios, the terminal device may perform communication via a non-terrestrial network (non-terrestrial network, NTN). For example, the terminal device may carry out some businesses, for example, making a call and sending an SMS message, via a LEO satellite communication network. Because a LEO satellite is in high-speed motion, to synchronously track a beam of the LEO satellite, the terminal device uses an omnidirectional antenna to track the beam of the LEO satellite.

However, quality of the LEO satellite communication network is poor due to limitations of LEO satellite deployment density, a LEO antenna, and the like. To improve the quality of the LEO satellite communication network, the terminal device chooses to optimize antenna efficiency in different directions. The antenna efficiency may be a ratio of an antenna receiving power to an antenna conversion power. However, to make all antenna efficiency in all directions optimal, an antenna has a large size, and is not applicable to a terminal device whose form is limited. Therefore, to obtain a service of the LEO satellite communication network in a large range, the terminal device may use a plurality of directional antennas in different directions. However, a solution to how the terminal device communicates with the LEO satellite when using the directional antenna is not yet proposed in the industry.

In view of this, embodiments of this application provide a satellite communication method, to resolve a problem of how a terminal device communicates with a LEO satellite when using a directional antenna.

The technical solutions of this application may be applied to NTN systems such as a satellite communication system, a high altitude platform station (high altitude platform station, HAPS) communication system, and an uncrewed aerial vehicle, for example, an integrated communication and navigation (integrated communication and navigation, IcaN) system, a global navigation satellite system (global navigation satellite system, GNSS), and an ultra-dense low-orbit satellite communication system.

The satellite communication system in embodiments of this application may include a transparent transmission satellite architecture and a non-transparent transmission satellite architecture. Transparent transmission is also referred to as bent-pipe forwarding transmission. To be specific, only processes such as frequency conversion and signal amplification are performed on a signal on a satellite, and the satellite is transparent to the signal as if the satellite does not exist. Non-transparent transmission may be referred to as regenerative transmission (on-satellite access/processing). To be specific, the satellite has a part or all of functions of a base station. The satellite mentioned in embodiments of this application may be a satellite base station, or may include an orbit receiver or a repeater configured to relay information, or may be a network side device mounted on the satellite. The satellite may be a LEO satellite, a MEO satellite, a HEO satellite, or a GEO satellite. This is not limited in this application.

The satellite communication system may be integrated with a conventional mobile communication system. For example, the mobile communication system may be a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), or a future mobile communication system, for example, a 6th generation (6th generation, 6G) mobile communication system.

The technical solutions in embodiments of this application may be applied to various communication scenarios, for example, may be applied to one or more of the following communication scenarios: enhanced mobile broadband (enhanced mobile broadband, eMBB), ultra reliable low latency communication (ultra reliable low latency communication, URLLC), machine type communication (machine type communication, MTC), massive machine type communications (massive machine type communications, mMTC), device-to-device (device-to-device, D2D), vehicle to everything (vehicle to everything, V2X), and an internet of things (internet of things, IoT).

The communication system and the communication scenario applicable to this application are merely examples for description. The communication system and the communication scenario applicable to this application are not limited thereto. The communication system and the communication scenario provided in this application do not constitute any limitation on the solutions of this application. A unified description is provided herein. Details are not described below again.

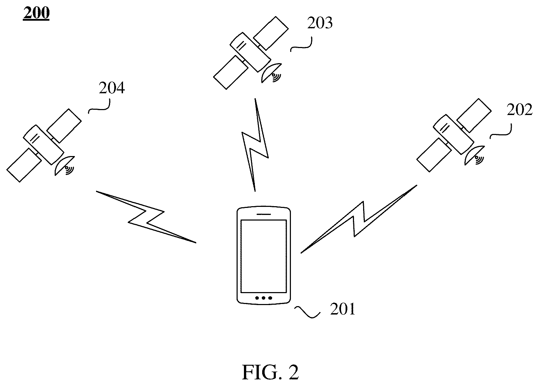

For example, FIG. 2 is a diagram of an architecture of a communication system according to an embodiment of this application. The communication system may be a satellite communication system or another communication system. In this embodiment of this application, the satellite communication system is used as an example.

As shown in FIG. 2, the communication system 200 includes at least one terminal device 201 (one terminal device 201 is shown in FIG. 2) and at least one satellite (three satellites are shown in FIG. 2), for example, a satellite 202, a satellite 203, and a satellite 204. Optionally, different satellites may communicate with each other, different terminal devices may communicate with each other, and the satellite and the terminal device may communicate with each other.

In some embodiments, the satellite in the communication system 200 may provide a communication service, a navigation service, a positioning service, and the like for the terminal device 201 via a plurality of beams. For example, the satellite may broadcast a communication signal and a navigation signal via beams, to perform wireless communication with the terminal device.

The terminal device 201 mentioned in this embodiment of this application is a terminal that accesses the communication system shown in FIG. 2 and has a wireless transceiver function, or a chip or a chip system that may be disposed in the terminal. The terminal device 201 may also be referred to as a user apparatus, an access terminal, a subscriber unit, a subscriber station, a mobile station, a remote station, a remote terminal, a mobile device, a user terminal, a terminal, a wireless communication device, a user agent, or the user apparatus. The terminal device 201 in this embodiment of this application may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a (road side unit, RSU) with a terminal function, or the like.

In some embodiments, the terminal device 201 may be a fixed device, or may be a portable device. Optionally, an operating system installed on the device 201 includes but is not limited to iOS^{®}, Android^{®}, Harmony^{®}, Linux^{®}, or another operating system. A specific type of the terminal device 201 and the operating system installed on the terminal device 201 are not limited in this application.

Optionally, the terminal device 201 in this embodiment of this application may also be referred to as a communication apparatus, and may be a general-purpose device or a dedicated device. This is not specifically limited in embodiments of this application.

The satellite communication method provided in embodiments of this application is applicable to the satellite and the terminal device shown in FIG. 2. For a specific implementation, refer to the following method embodiments. Details are not described herein.

It should be noted that the solutions in embodiments of this application may be further applied to another communication system, and a corresponding name may also be replaced with a name of a corresponding function in the another communication system.

It should be understood that FIG. 2 is merely a simplified diagram of an example for ease of understanding. The communication system may further include another device that is not drawn in FIG. 2.

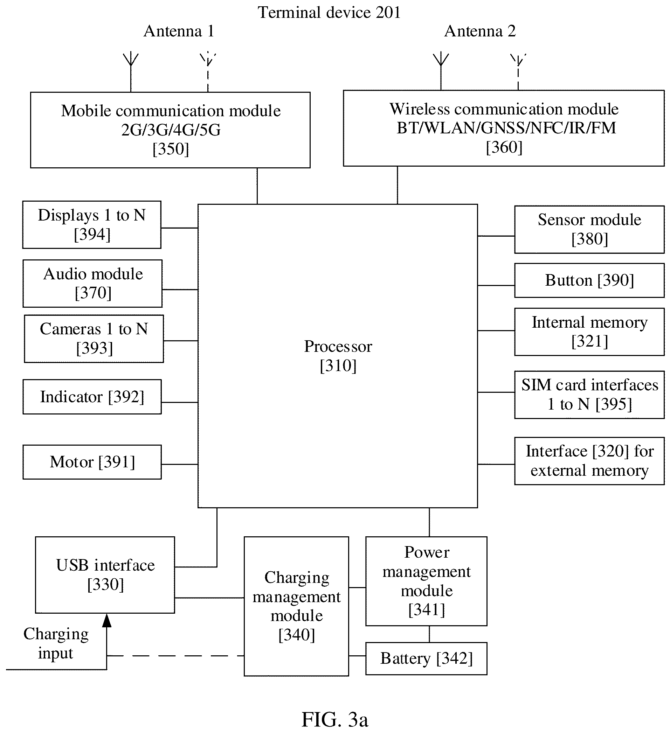

For example, the terminal device 201 is a mobile phone. FIG. 3a is a diagram of a structure of the terminal device 201.

The terminal device 201 may include a processor 310, an interface 320 for external memory, an internal memory 321, a universal serial bus (universal serial bus, USB) interface 330, a charging management module 340, a power management module 341, a battery 342, an antenna 1, an antenna 2, a mobile communication module 350, a wireless communication module 360, an audio module 370, a sensor module 380, a button 390, a motor 391, an indicator 392, a camera 393, a display 394, a subscriber identification module (subscriber identification module, SIM) card interface 395, and the like.

The processor 310 may include one or more processing units. For example, the processor 310 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors.

The controller may generate an operation control signal based on an instruction operation code and a time sequence signal, to complete control of instruction fetching and instruction execution.

A memory may be further disposed in the processor 310, and is configured to store instructions and data. In some embodiments, the memory in the processor 310 is a cache. The memory may store instructions or data just used or cyclically used by the processor 310. If the processor 310 needs to use the instructions or the data again, the processor may directly invoke the instructions or the data from the memory. This avoids repeated access, and reduces a waiting time of the processor 310, thereby improving system efficiency.

In some embodiments, the processor 310 may include one or more interfaces.

The charging management module 340 is configured to receive a charging input from a charger. The charger may be a wireless charger or a wired charger.

The power management module 341 is configured to connect to the battery 342, the charging management module 340, and the processor 310. The power management module 341 receives an input from the battery 342 and/or an input from the charging management module 340, and supplies power to the processor 310, the internal memory 321, the display 394, the camera 393, the wireless communication module 360, and the like.

A wireless communication function of the terminal device 201 may be implemented via the antenna 1, the antenna 2, the mobile communication module 350, the wireless communication module 360, the modem processor, the baseband processor, and the like.

The antenna 1 and the antenna 2 are configured to: transmit and receive electromagnetic wave signals. Each antenna in the terminal device 201 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

In some embodiments of this application, the terminal device 201 may include a plurality of antennas 2, and the plurality of antennas 2 may include a plurality of directional antennas. Optionally, the directional antenna may be a single antenna, or may be a plurality of antennas that are integrated, for example, a phased array antenna. A physical form of the directional antenna is not limited in this application. Optionally, the plurality of antennas 2 may further include an omnidirectional antenna and the like.

In some embodiments, coverage of different directional antennas included in the terminal device 201 are different, and different directional antennas may be used by the terminal device 201 to receive signals in different ranges or transmit signals in different ranges. It may be understood that, in this embodiment of this application, the coverage of the directional antenna may be a spatial range in which the directional antenna can receive and send signals around the terminal device.

It may be understood that, in this embodiment of this application, the coverage of the directional antenna may be coverage of the directional antenna in a reference coordinate system. The reference coordinate system may include but is not limited to a geodetic coordinate system and the like. When a location of the directional antenna in the reference coordinate system varies, the coverage of the directional antenna may vary.

In some embodiments, the coverage of the directional antenna included in the terminal device may include at least one of a horizontal range and a vertical range. It may be understood that the horizontal range may be a range in a horizontal direction, and the horizontal direction may be a direction parallel to a horizontal plane. The vertical range may be a range in a vertical direction, and the vertical direction may be a direction perpendicular to the horizontal plane. For descriptions of the horizontal plane, refer to the foregoing descriptions.

In some embodiments, the coverage of the directional antenna included in the terminal device may be coverage of the terminal device in a direction. However, a location of the directional antenna in the terminal device, beam directivity relative to the terminal device, and the like are fixed, that is, when a location, a posture, and the like of the terminal device change, the coverage of the directional antenna also changes accordingly. Therefore, the coverage of the directional antenna is fixed relative to the terminal device.

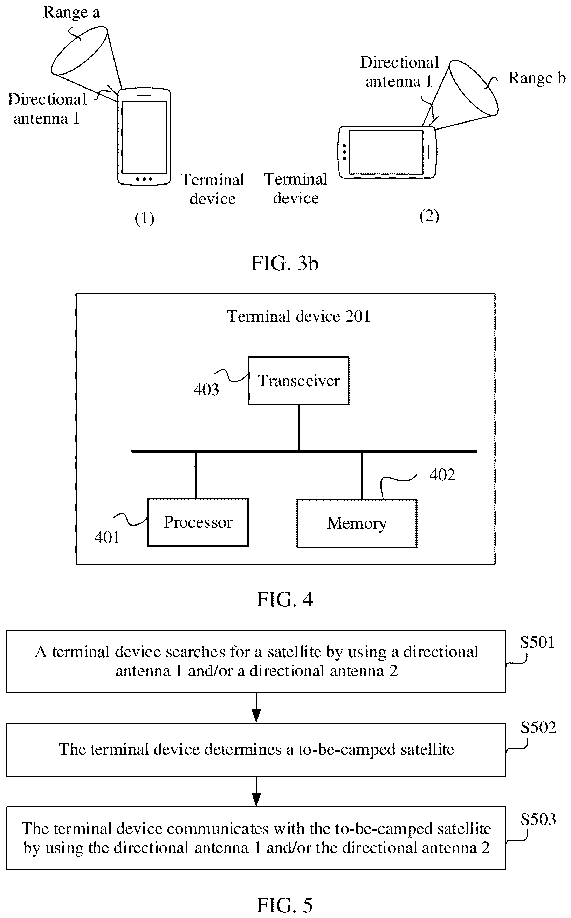

For example, the coverage of the directional antenna includes both the horizontal range and the vertical range. In a possible implementation, the coverage of the directional antenna may be identified via an elevation angle from the terminal device to the satellite in a specific horizontal range. As shown in (1) in FIG. 3b, coverage of a directional antenna 1 disposed in a terminal device is a range a. For example, the range a may be a 10-degree to 60-degree elevation angle on the left side of the terminal device (for example, a horizontal 180-degree range or another horizontal range). As shown in (2) in FIG. 3b, for example, coverage of a directional antenna 1 disposed in a terminal device is a range b. The range b may be a 30-degree to 80-degree elevation angle on the right side of the terminal device (for example, a horizontal 180-degree range or another horizontal range on the right side). A relative relationship between the range a and the terminal device shown in (1) in FIG. 3b is the same as a relative relationship between the range b and the terminal device shown in (2) in FIG. 3b. It may be understood that the terminal device shown in (1) in FIG. 3b and the terminal device shown in (2) in FIG. 3b are a same terminal device, and the directional antenna 1 shown in (1) in FIG. 3b and the directional antenna 1 shown in (2) in FIG. 3b are a same directional antenna.

It may be understood that, in accompanying drawings in embodiments of this application, a line represents a directional antenna of a terminal device, and a form and a location shown in a figure the figures do not constitute a limitation on the directional antenna. A directional antenna marked outside the terminal device does not mean that the directional antenna is definitely disposed outside the terminal device, that is, at a location visible to a user. The directional antenna may alternatively be disposed inside the terminal device, that is, at a location invisible to the user.

In some other embodiments, the terminal device 201 may alternatively include one or more antennas 1. The antenna 1 may include an omnidirectional antenna, or may include a directional antenna. This is not limited in embodiments of this application.

Optionally, the antenna 1, the antenna 2, and the like may be disposed near the camera 393 of the terminal device 201, or may be disposed on a metal frame of the terminal device 201, or may be disposed at another location of the terminal device 201. A location at which the antenna 1 and the antenna 2 are disposed is not limited in this application.

The mobile communication module 350 may provide a solution that is applied to the terminal device 201 and that includes wireless communication such as 2G, 3G, 4G, and 5G. The mobile communication module 350 may include at least one filter, a switch, a power amplifier, a low noise amplifier (low noise amplifier, LNA), and the like. The mobile communication module 350 may receive an electromagnetic wave via the antenna 1, perform processing like filtering or amplification on the received electromagnetic wave, and transmit a processed electromagnetic wave to the modem processor for demodulation. The mobile communication module 350 may further amplify a signal modulated by the modem processor, and convert an amplified signal into an electromagnetic wave for radiation via the antenna 1. In some embodiments, at least a part of functional modules of the mobile communication module 350 may be disposed in the processor 310. In some embodiments, at least a part of the functional modules of the mobile communication module 350 may be disposed in a same device as at least a part of modules of the processor 310.

The wireless communication module 360 may provide a solution that is applied to the terminal device 201 and that includes wireless communication such as a satellite communication system, a global navigation satellite system (global navigation satellite system, GNSS), a wireless local area network (wireless local area network, WLAN) (for example, a wireless fidelity (wireless fidelity, Wi-Fi) network), Bluetooth (Bluetooth, BT), frequency modulation (frequency modulation, FM), near field communication (near field communication, NFC), and an infrared (infrared, IR) technology. The wireless communication module 360 may be one or more devices integrating at least one communication processing module. The wireless communication module 360 receives an electromagnetic wave via the antenna 2, performs frequency modulation and filtering processing on an electromagnetic wave signal, and sends a processed signal to the processor 310. The wireless communication module 360 may further receive a to-be-sent signal from the processor 310, perform frequency modulation and amplification on the to-be-sent signal, and convert a processed signal into an electromagnetic wave for radiation via the antenna 2. In some embodiments of this application, the wireless communication module 360 may be used by the terminal device 201 to communicate with the satellite.

In some embodiments, in the terminal device 201, the antenna 1 is coupled to the mobile communication module 350, and the antenna 2 is coupled to the wireless communication module 360, so that the terminal device 201 can communicate with a network and another device via a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The terminal device 201 implements a display function via the GPU, the display 394, the application processor, and the like. The display 394 is configured to display an image, a video, and the like. The display 394 includes a display panel. In some embodiments, the terminal device 201 may include one or N displays 394, where N is a positive integer greater than 1. In some embodiments of this application, the display 394 may be configured to output various reminder messages.

The terminal device 201 may implement a photographing function via the ISP, the camera 393, the video codec, the GPU, the display 394, the application processor, and the like.

The camera 393 is configured to capture a static image or a video.

The interface 320 for external memory may be configured to connect to an external memory card, for example, a micro SD card, to extend a storage capability of the terminal device 201.

The internal memory 321 may be configured to store computer-executable program code, where the executable program code includes instructions. The processor 310 runs the instructions stored in the internal memory 321 and/or the instructions stored in the memory disposed in the processor, to perform various function applications of the terminal device 201 and data processing.

The terminal device 201 may implement an audio function via the audio module 370, the application processor, and the like.

Optionally, the sensor module 380 may include but is not limited to one or more of a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The button 390 includes a power button, a volume button, and the like.

The motor 391 may generate a vibration prompt.

The indicator 392 may be an indicator light, and may be configured to indicate a charging status or a power change, or may be configured to indicate a message, a missed call, a notification, or the like.

The SIM card interface 395 is configured to connect to a SIM card.

For example, the foregoing uses merely the mobile phone as an example to describe the structure of the terminal device 201 in this embodiment of this application, but does not constitute a limitation on the structure and the form of the terminal device 201. The structure and the form of the terminal device 201 are not limited in embodiments of this application. For example, FIG. 4 shows another example structure of the terminal device 201. As shown in FIG. 4, the terminal device 201 includes a processor 401, a memory 402, and a transceiver 403. For implementations of the processor 401 and the memory 402, refer to the implementations of the processor and the memory shown in FIG. 3a. The transceiver 403 may be used by the terminal device 201 to interact with another device (for example, a satellite). The transceiver 403 may be a device based on various wireless communication protocols. In some embodiments, the transceiver 403 includes a plurality of directional antennas. For descriptions of the plurality of directional antennas, refer to the corresponding descriptions of the antenna 2 in FIG. 3a.

It may be understood that the structure shown in this embodiment of the present invention does not constitute a specific limitation on the terminal device 201. In some other embodiments of this application, the terminal device 201 may include more or fewer components than those shown in the figure, or a combination of a part of the components, or splits from a part of the components, or an arrangement of different components. The components shown in the figure may be implemented by hardware, software, or a combination of the software and the hardware.

Technical solutions in the following embodiments may be all implemented by a device having the structure shown in FIG. 3a or FIG. 4 and a system having the architecture shown in FIG. 2.

It may be understood that, in embodiments of this application, the terminal device may perform a part or all of steps in embodiments of this application, and these steps or operations are merely examples. In embodiments of this application, another operation or variants of various operation may be further performed. In addition, the steps may be performed in a sequence different from that presented in embodiments of this application, and not all the operations in embodiments of this application may be necessarily performed.

Embodiments of this application provide a satellite communication method, applied to a terminal device including a plurality of directional antennas. Coverage of the plurality of directional antennas is different. The terminal device may communicate with the satellite in coverage of each directional antenna by using the directional antenna. For example, the terminal device may receive a signal from the coverage of the directional antenna by using the directional antenna, or transmit a signal in the coverage of the directional antenna by using the directional antenna.

With reference to specific scenarios, the following uses an example in which the terminal device includes two directional antennas with different coverage: a directional antenna 1 and a directional antenna 2, coverage of the directional antenna 1 is a range 1, and coverage of the directional antenna 2 is a range 2, to describe in detail the satellite communication method provided in embodiments of this application.

It may be understood that, in embodiments of this application, an example in which the terminal device includes the two directional antennas with the different coverage is used. The technical solutions provided in embodiments of this application are also applicable to a case in which the terminal device includes three or more directional antennas with different coverage.

### Scenario 1: a scenario in which the terminal device searches for and camps on a satellite

For example, in this scenario, FIG. 5 is a schematic flowchart of a satellite communication method according to an embodiment of this application. For example, as shown in FIG. 5, the method includes the following steps.

S501: The terminal device searches for the satellite by using the directional antenna 1 and/or the directional antenna 2.

In some scenarios, before searching for the satellite, the terminal device may obtain an ephemeris of the satellite. For example, the terminal device may receive the ephemeris of the satellite from a terrestrial communication network. Alternatively, if the terminal device has previously established a connection to the satellite and has stored the ephemeris of the satellite, the terminal device may directly obtain the ephemeris of the satellite from a memory. A manner in which the terminal device obtains the ephemeris of the satellite is not limited in embodiments of this application.

In this scenario, a location of the satellite may be determined based on the ephemeris of the satellite. For example, the location of the satellite, at a current time, when the terminal device is at a current location may be calculated based on a plurality of factors in a location of the terminal device, the current time, the ephemeris of the satellite, and the like. For example, the location of the terminal device may be obtained based on various positioning technologies, for example, including but not limited to a global positioning system (global positioning system, GPS) and a BeiDou system.

Optionally, the terminal device may calculate the location of the satellite, or another device may calculate the location of the satellite. Correspondingly, the another device then sends, to the terminal device, the location of the satellite obtained through calculation. This is not limited in embodiments of this application.

Therefore, in this scenario, in some embodiments, before searching for the satellite, the terminal device may first determine which satellite is in coverage of a directional antenna, and then search, by using the directional antenna, for the satellite in the coverage of the directional antenna. In this way, after it is determined which directional antenna has coverage that the satellite is in, the corresponding directional antenna is used for search. To be specific, a directional antenna corresponding to coverage that the satellite is not in is no longer used for the search operation. This can reduce power consumption of the terminal device.

In a possible implementation, the terminal device may determine an elevation angle from the terminal device to the satellite based on the location of the terminal device, the location of the satellite, and the like, and then determine, based on the elevation angle from the terminal device to the satellite, which satellite is in coverage of a directional antenna. For a specific implementation of calculating the elevation angle from the terminal device to the satellite, refer to an implementation in a related technology.

In some embodiments, when the terminal device is in different postures, coverage of a same directional antenna in the terminal device varies. For example, with reference to the example shown in FIG. 3b, when the terminal device is in a posture shown in (1) in FIG. 3b, the coverage of the directional antenna 1 is the range a, and the range a may be a 10-degree to 60-degree elevation angle on the left side of the terminal device. However, when the posture of the terminal device changes, for example, when the terminal device is rotated rightward by 90 degrees, as shown in (2) in FIG. 3b, the coverage of the directional antenna 1 changes to the range b, and the range b is a 30-degree to 80-degree elevation angle on the right side of the terminal device.

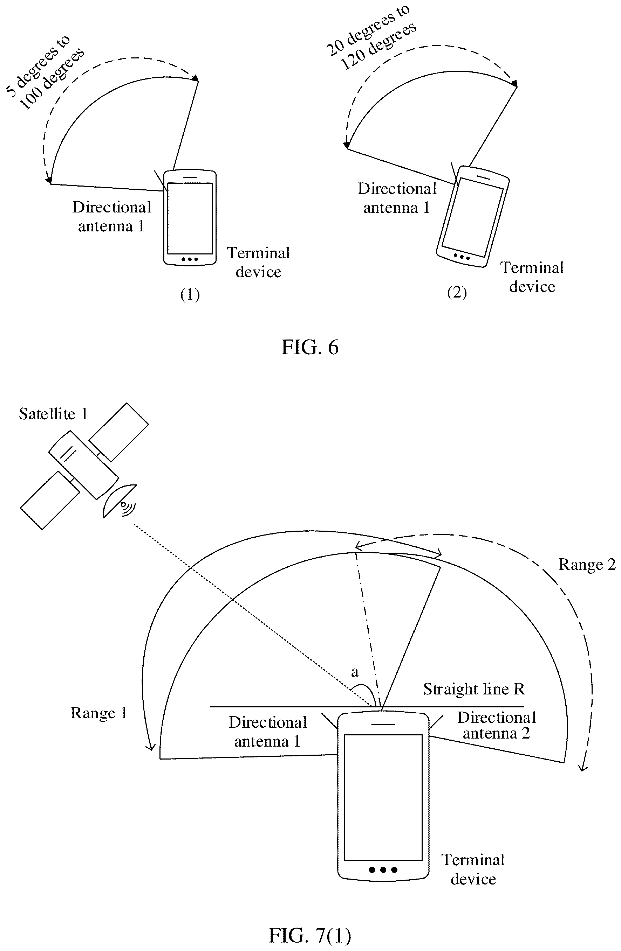

For another example, as shown in FIG. 6, when the terminal device is in a posture shown in (1) in FIG. 6, the coverage of the directional antenna 1 may be a 5-degree to 100-degree elevation angle on the left side of the terminal device. However, when the posture of the terminal device changes, the coverage of the directional antenna 1 may also change correspondingly. For example, if the terminal device is rotated by 15 degrees and becomes to be in a posture shown in (2) in FIG. 6, the coverage of the directional antenna 1 correspondingly changes to a 20-degree to 120-degree elevation angle on the left side of the terminal device.

For example, the posture of the terminal device may be determined based on a pitch angle, an azimuth, a rotation angle, and the like of the terminal device, or may be determined based on coordinates of the terminal device in a reference coordinate system (for example, a spherical coordinate system or a space rectangular coordinate system).

Therefore, in some embodiments, the coverage of the directional antenna may be first determined based on the posture of the terminal device, and then it is determined, based on the elevation angle from the terminal device to the satellite, which satellite is in coverage of a directional antenna.

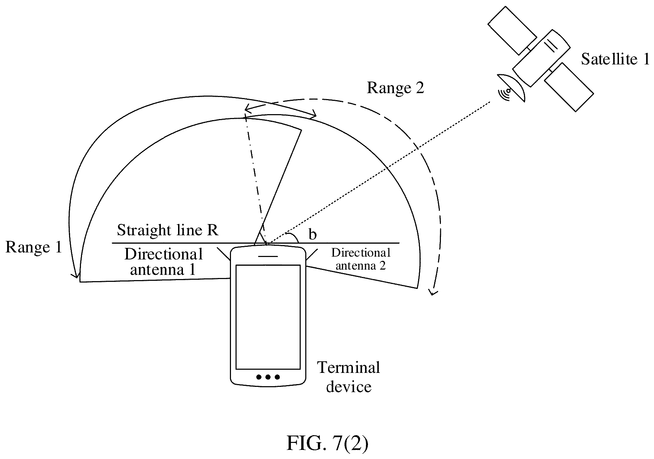

Further, the terminal device may determine to use the corresponding directional antenna to search for the satellite in the coverage of the directional antenna. For example, for one satellite, if it is determined that an elevation angle from the terminal device to the satellite is only in coverage of one directional antenna, the corresponding directional antenna is used to search for the satellite. As shown in FIG. 7(1), an elevation angle a from the terminal device to a satellite 1 is in a range 1, and is not in a range 2. In this case, the directional antenna 1 is used to search for the satellite 1. As shown in FIG. 7(2), an elevation angle b from the terminal device to the satellite 1 is not in the range 1, and is in the range 2. In this case, the directional antenna 2 is used to search for the satellite 1.

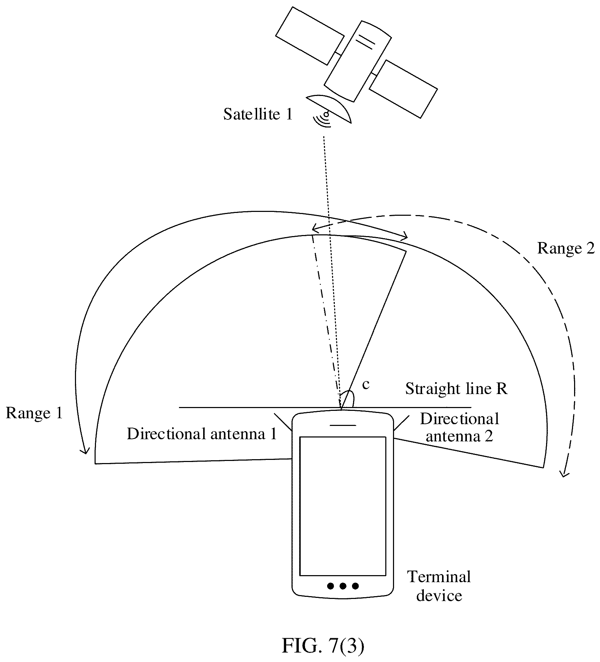

For another example, for one satellite, if it is determined that an elevation angle from the terminal device to the satellite is in coverage of two directional antennas, both the two directional antennas are used to search for the satellite. As shown in FIG. 7(3), if it is determined that an elevation angle c from the terminal device to the satellite 1 is in the range 1 and is also in the range 2, both the directional antenna 1 and the directional antenna 2 are used to search for the satellite 1.

It may be understood that straight lines R shown in FIG. 7(1) to FIG. 7(3) are all straight lines that projections of connection lines between the terminal device and the satellite 1 onto a horizontal plane (not shown in the figure) that the terminal device is on are on.

Certainly, when the satellite is in the coverage of the two directional antennas, the terminal device may alternatively select one of the directional antennas to search for the satellite.

Optionally, in this embodiment of this application, the coverage of the directional antenna 1 and the coverage of the directional antenna 2 may be completely independent coverage, or may overlap. When the coverage of the directional antenna 1 and the coverage of the directional antenna 2 are completely independent coverage, for a same satellite, at a moment, the satellite may be only in coverage of one of the directional antennas. In this case, in this embodiment, the terminal device may search for the satellite by using only the directional antenna corresponding to the coverage that the satellite is in.

It may be understood that the foregoing embodiment uses one satellite as an example, and a plurality of satellites may be searched for. Optionally, one directional antenna may search for all the plurality of satellites, or the plurality of directional antennas may search for all the plurality of satellites.

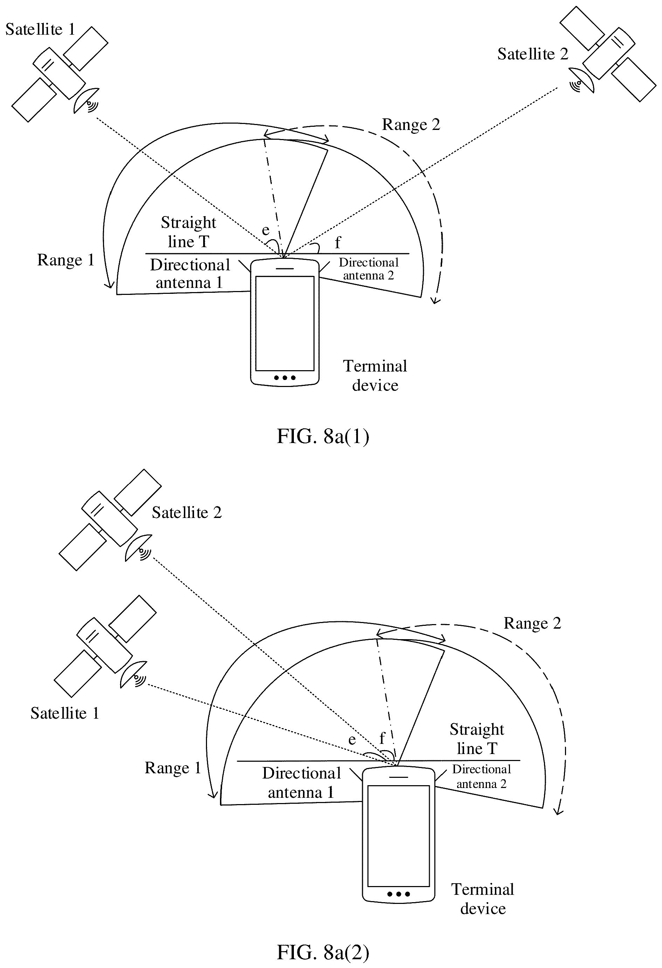

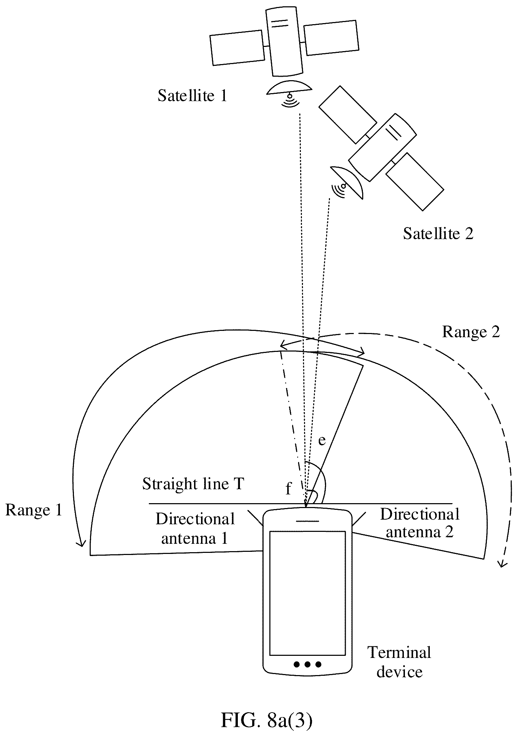

As shown in FIG. 8a(1), an elevation angle e from the terminal device to the satellite 1 is in the range 1, and is not in the range 2, and an elevation angle f from the terminal device to a satellite 2 is in the range 2, and is not in the range 1. In this case, the terminal device may search for the satellite 1 by using the directional antenna 1, and search for the satellite 2 by using the directional antenna 2.

As shown in FIG. 8a(2), both the elevation angle e from the terminal device to the satellite 1 and the elevation angle f from the terminal device to the satellite 2 are in the range 1, and are not in the range 2. In this case, the terminal device may search for both the satellite 1 and the satellite 2 by using the directional antenna 1.

As shown in FIG. 8a(3), both the elevation angle e from the terminal device to the satellite 1 and the elevation angle f from the terminal device to the satellite 2 are in the range 1, and are also in the range 2. In this case, the terminal device may search for both the satellite 1 and the satellite 2 by using the directional antenna 1 and the directional antenna 2. Certainly, in this example, the terminal device may alternatively select one of the directional antennas to search for both the satellite 1 and the satellite 2.

It may be understood that straight lines T shown in FIG. 8a(1) to FIG. 8a(3) are all straight lines that projections of connection lines between the terminal device and the satellite 1 onto a horizontal plane (not shown in the figure) that the terminal device is on are on, and are straight lines that projections of connection lines between the terminal device and the satellite 2 onto the horizontal plane that the terminal device is on are on.

In the foregoing embodiment, for one satellite, if the terminal device searches for the satellite by using all the plurality of directional antennas, the terminal device may combine and process signals received by the plurality of directional antennas. If the terminal device searches for the satellite by using only one directional antenna, the terminal device may separately process a signal received by the directional antenna.

Optionally, when the terminal device searches for the satellite by using the plurality of directional antennas, the plurality of directional antennas may synchronously search for the satellite, or may sequentially search for the satellite.

In some other scenarios, before the terminal device searches for the satellite, the terminal device may not obtain the ephemeris of the satellite due to various reasons. To be specific, the terminal device may not determine the location of the satellite, and therefore cannot determine which satellite is in coverage of a directional antenna.

Therefore, in this scenario, in some embodiments, the terminal device may directly search for the satellite by using a part or all of the directional antennas. The search process may be referred to as a "blind search" process. In this way, a probability of searching for the satellite may be increased.

It may be understood that, in this embodiment, in a process of searching for the satellite by using each directional antenna, the terminal device may search for the satellite in the coverage corresponding to the directional antenna.

In some embodiments, at a same moment, the terminal device may search for the satellite by using one of the directional antennas. For example, the terminal device may first search for the satellite by using the directional antenna 1, and after the search ends, the terminal device may further continue to search for the satellite by using the directional antenna 2. It may be understood that a search sequence of the directional antennas is not limited in embodiments of this application.

In some other embodiments, at a same moment, the terminal device may search for the satellite by using all the plurality of directional antennas (for example, the directional antenna 1 and the directional antenna 2). Optionally, in this embodiment, the terminal device may combine and process the signals received by the plurality of directional antennas, or may separately process the signals received by the plurality of directional antennas.

Certainly, in the scenario in which the terminal device can obtain the ephemeris of the satellite, the terminal device may alternatively search for the satellite by using the solution in the scenario in which the ephemeris of the satellite cannot be obtained.

In some embodiments, to improve efficiency of searching for the satellite by the terminal device, increase a probability that the terminal device finds the satellite, and the like, the terminal device may further output a reminder message (for example, display the reminder message on a display, or broadcast the reminder message by voice), to remind a user of how to place the terminal device, namely, a posture in which the terminal device is enabled to be, so that the satellite can be more likely to fall within the coverage of the directional antenna included in the terminal device.

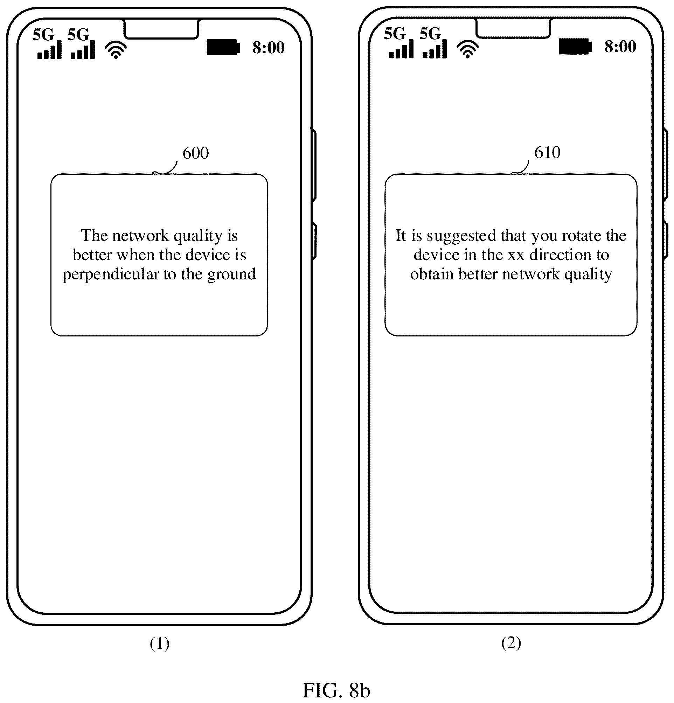

For example, the reminder message may be a reminder message 600 shown in (1) in FIG. 8b, or may be a reminder message 610 shown in (2) in FIG. 8b. Specific content included in the reminder message is not limited in embodiments of this application.

In some embodiments, the terminal device may further determine, based on one or more of a current posture of the terminal device, the coverage of the directional antenna, the location of the satellite, the elevation angle from the terminal device to the satellite, a relative relationship between the coverage of the directional antenna and the terminal device, and the like, whether to output the foregoing reminder message, the content included in the output reminder message, and the like. For example, the terminal device may output the foregoing reminder message when the terminal device determines that the satellite is not in coverage of any directional antenna included in the terminal device, or when the terminal device determines that a quantity of directional antennas in coverage that the satellite is in does not meet a preset condition. For example, the preset condition may include but is not limited to: The quantity of directional antennas in the coverage is greater than or equal to a preset quantity, or a proportion of the quantity of directional antennas in the coverage in all the directional antennas is greater than or equal to a preset proportion.

On the contrary, the terminal device may alternatively not output the foregoing reminder message when the terminal device determines that the satellite is in coverage of several directional antennas included in the terminal device, or when the terminal device determines that the quantity of directional antennas in the coverage that the satellite is in meets the preset condition.

Optionally, the terminal device may output the foregoing reminder message before searching for the satellite, or may output the foregoing reminder message in the process of searching for the satellite. Certainly, in another embodiment, for example, in a process in which the terminal device performs business communication with the satellite, the terminal device may also output the reminder message, to remind the user of how to place the terminal device, namely, the posture in which the terminal device is enabled to be, so that the satellite can be more likely to fall within the coverage of the directional antenna included in the terminal device, thereby obtaining better quality of service of the satellite. An occasion on which the terminal device outputs the reminder message is not specifically limited in embodiments of this application.

Optionally, the terminal device may search for one or more satellites by using the directional antenna. It may be understood that searching, by the terminal device, for the satellite by using the directional antenna may be understood as searching for a signal of the satellite.

In some embodiments, after finding the signal of the satellite, the terminal device may further synchronize with time of the satellite, so that in a subsequent process of communicating with the satellite, after the satellite transmits the signal, the terminal device determines when to receive the signal.

S502: The terminal device determines a to-be-camped satellite.

In some embodiments, the terminal device may determine, from the one or more found satellites, which satellite is to be used as the to-be-camped satellite. It may be understood that, after the terminal device uses a satellite as the to-be-camped satellite, the satellite may provide a communication service for the terminal, for example, various types of business communication such as sending an SMS message and making a call.

In some embodiments, the terminal device may use, as the to-be-camped satellite, a satellite that meets a camping condition. For example, the camping condition may be determined based on one or more of signal strength of the satellite, service duration of the satellite, a system message (for example, a system information block (system information block, SIB) in a broadcast message) of the satellite, and the like. The service duration of the satellite may be duration in which the satellite can provide a service for the current terminal device. For example, the service duration of the satellite may be determined based on the location of the terminal device and the location of the satellite. Optionally, the location of the satellite may be determined by the ephemeris of the satellite obtained before the terminal device searches for the satellite, or may be determined by an ephemeris obtained from the system message of the satellite after the satellite is found, or may be obtained in another manner. Certainly, the service duration of the satellite may alternatively be determined in another manner. This is not limited in embodiments of this application.

For example, the to-be-camped satellite may be a satellite that has highest signal strength and longest service duration and whose radio resource can be allocated to the terminal for use in the found satellite.

In some embodiments, when the terminal device searches for a same satellite by using both the directional antenna 1 and the directional antenna 2, the terminal device may receive system messages of the same satellite by using both the directional antenna 1 and the directional antenna 2. Subsequently, the terminal device may combine and parse the system messages received by the two directional antennas, to assist in determining which satellite is used as the to-be-camped satellite. In this way, accuracy of the system message obtained through parsing can be improved, thereby obtaining a better to-be-camped satellite.

**In** some other embodiments, when the terminal device searches for the same satellite by using only one directional antenna, the terminal device may receive a system message of the same satellite by using only the one directional antenna. Subsequently, the terminal device may separately parse the system message received by the directional antenna, to assist in determining which satellite is used as the to-be-camped satellite. In this way, when a system message of one satellite is parsed, only a signal of a directional antenna that receives the system message is processed, and a signal of a directional antenna that does not receive the system message is not combined with the foregoing signal for processing. This introduces no additional noise, and increases no system power consumption.

S503: The terminal device communicates with the to-be-camped satellite by using the directional antenna 1 and/or the directional antenna 2.

In some embodiments, the terminal device may determine, based on a correspondence between a directional antenna and a to-be-camped satellite, which directional antenna is used to communicate with the to-be-camped satellite, for example, transmit a signal to the to-be-camped satellite or receive a signal from the to-be-camped satellite. For example, if the directional antenna 1 corresponds to the to-be-camped satellite, the terminal device communicates with the to-be-camped satellite by using the directional antenna 1. If the directional antenna 2 corresponds to the to-be-camped satellite, the terminal device communicates with the to-be-camped satellite by using the directional antenna 2.

In some embodiments, the correspondence may be determined based on which directional antenna has coverage that the to-be-camped satellite is in. For example, if the to-be-camped satellite is in the coverage of the directional antenna 1, it may be determined that the to-be-camped satellite corresponds to the directional antenna 1. If the to-be-camped satellite is in the coverage of the directional antenna 2, it may be determined that the to-be-camped satellite corresponds to the directional antenna 2. If the to-be-camped satellite is in the coverage of the directional antenna 1 and the directional antenna 2, it may be determined that the to-be-camped satellite corresponds to both the directional antenna 1 and the directional antenna 2.

Optionally, when the to-be-camped satellite corresponds to all the plurality of directional antennas, the terminal device may communicate with the to-be-camped satellite by using a part of or all of the plurality of directional antennas.

In a specific implementation, the terminal device may determine, based on an elevation angle from the terminal device to the to-be-camped satellite, which directional antenna has coverage that the to-be-camped satellite is in, and then determine which directional antenna is used to communicate with the to-be-camped satellite.

For example, if the terminal device determines that the elevation angle from the terminal device to the to-be-camped satellite is in the range 1 and is not in the range 2, the terminal device determines to communicate with the to-be-camped satellite by using the directional antenna 1. For another example, if the terminal device determines that the elevation angle from the terminal device to the to-be-camped satellite is not in the range 1 and is in the range 2, the terminal device determines to communicate with the to-be-camped satellite by using the directional antenna 2. For another example, if the terminal device determines that the elevation angle from the terminal device to the to-be-camped satellite is in the range 1 and is also in the range 2, the terminal device determines to communicate with the to-be-camped satellite by using both the directional antenna 1 and the directional antenna 2.

### Scenario 2: a scenario in which the terminal device tracks a beam of a camped satellite

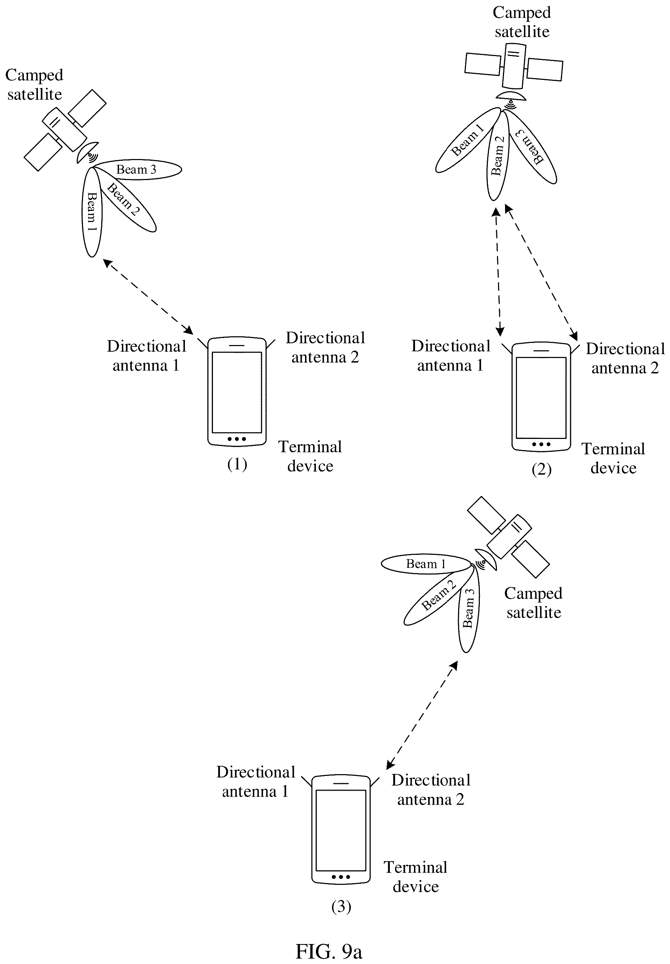

In some embodiments, the camped satellite may communicate with the terminal device by using a plurality of beams. However, because the camped satellite is constantly in motion, to ensure communication quality, the terminal device needs to determine which directional antenna is used to communicate with a beam of the camped satellite, thereby obtaining better quality of service of the satellite. For example, FIG. 9a is a diagram of a scenario in which a terminal device traces a beam of a camped satellite according to an embodiment of this application. When the camped satellite is at a location shown in (1) in FIG. 9a, the terminal device communicates with a beam 1 of the camped satellite by using a directional antenna 1. When the camped satellite is at a location shown in (2) in FIG. 9a, the terminal device communicates with a beam 2 of the camped satellite by using the directional antenna 1 and a directional antenna 2. When the camped satellite is at a location shown in (3) in FIG. 9a, the terminal device communicates with a beam 3 of the camped satellite by using a directional antenna 2.

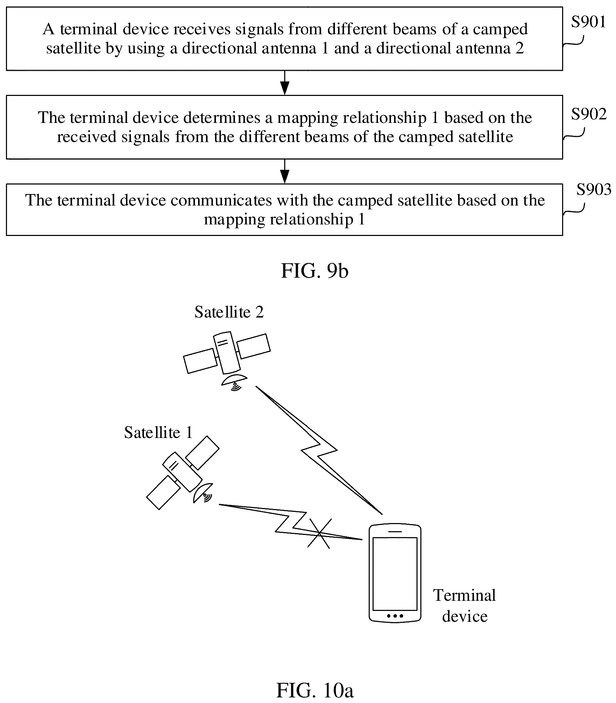

In this scenario, FIG. 9b is a schematic flowchart of another satellite communication method according to an embodiment of this application. For example, as shown in FIG. 9b, the method includes the following steps.

S901: The terminal device receives signals from different beams of the camped satellite by using the directional antenna 1 and the directional antenna 2.

In some embodiments, the camped satellite may include one or more different beams, and the different beams may send signals on different time-frequency resources. The terminal device may separately receive the signals from the different beams of the camped satellite on corresponding time-frequency resources by using the directional antenna 1 and the directional antenna 2.

In some embodiments, different satellites correspond to different timings. It may be understood that the timing of the satellite may be used by the terminal device to determine when to receive a signal sent by the satellite. Therefore, the terminal device may receive the signals from the different beams of the camped satellite by using a timing of the camped satellite.

Optionally, the terminal device may receive the signals from all the beams of the camped satellite, or may receive signals from a part of the beams of the camped satellite. For example, when the camped satellite has indicated beams whose signals are to be measured by the terminal device, the terminal device may receive the signals of the corresponding beams based on the indication. When the camped satellite does not indicate the beams whose signals are to be measured by the terminal device, the terminal device may receive the signals from all the beams of the camped satellite.

Optionally, the terminal device may receive the signals from the different beams of the camped satellite by using all the directional antennas, or may receive the signals from the different beams of the camped satellite by using a part of the directional antennas.

S902: The terminal device determines a mapping relationship 1 based on the received signals from the different beams of the camped satellite.

The mapping relationship 1 may be a correspondence between a directional antenna of the terminal device and a beam of the camped satellite. Optionally, the mapping relationship 1 may include a correspondence between one or more directional antennas of the terminal device and a beam of the camped satellite. The mapping relationship 1 may include a correspondence between all or a part of the directional antennas of the terminal device and a beam of the camped satellite.

In some embodiments, the terminal device may separately measure strength or quality of the signals received by different directional antennas from different beams. Then, the terminal device may determine the mapping relationship 1 based on the strength or the quality of the signals received by the different directional antennas from the different beams.

For example, the signal strength of the beam is represented by a reference signal received power (reference signal receiving power, RSRP), and the beam of the camped satellite includes a beam 1, a beam 2, and a beam 3. Table 1 shows some examples of RSRPs received by the different directional antennas from the different beams according to this embodiment of this application.

**Table 1**

| Directional antenna | Beam 1 | Beam 2 | Beam 3 |
|---|---|---|---|
| Directional antenna 1 | -110 dBm | -85 dBm | -125 dBm |
| Directional antenna 2 | -130 dBm | -95 dBm | -90 dBm |

In some embodiments, the terminal device may comprehensively sort results of all the directional antennas shown in Table 1, to determine, from the results, a directional antenna and a beam of the camped satellite that correspond to optimal signal strength or quality of the beam, and then establish the mapping relationship 1 based on the determined directional antenna and beam of the camped satellite. For example, with reference to Table 1, "-85 dBm" is a largest value. Therefore, the terminal device may determine that the directional antenna 1 corresponds to the beam 2. To be specific, the mapping relationship 1 may include a correspondence between the directional antenna 1 and the beam 2. In this way, it can be ensured that the terminal device can obtain optimal quality of service of the satellite.

In some other embodiments, the terminal device may separately sort results of each directional antenna shown in Table 1, to determine, from the results, a beam of the camped satellite corresponding to the directional antenna when the signal strength or signal quality of the beam is optimal, and then establish the mapping relationship 1 based on the determined directional antenna and corresponding beam of the camped satellite. For example, with reference to Table 1, for the directional antenna 1, "-85 dBm" is a largest value. Therefore, the terminal device may determine that the directional antenna 1 corresponds to the beam 2. The mapping relationship 1 may include a correspondence between the directional antenna 1 and the beam 2. For the directional antenna 2, "-90 dBm" is a largest value. Therefore, the terminal device may determine that the directional antenna 2 corresponds to the beam 3. The mapping relationship 1 may further include a correspondence between the directional antenna 2 and the beam 3. In this way, it can be ensured that the terminal device can obtain good quality of service of the satellite.

In some other embodiments, for a same beam, if the terminal device determines that a difference between results of different directional antennas is less than or equal to a preset threshold, the terminal device may establish the mapping relationship 1 based on the beam and the different directional antennas corresponding to the beam. Optionally, in this embodiment, the beam may be a beam of the camped satellite corresponding to good or optimal signal strength or quality. For example, the preset threshold is that an RSRP is 10 dBm. With reference to Table 1, for the beam 2, an RSRP corresponding to the directional antenna 1 is "-85 dBm", an RSRP corresponding to the directional antenna 2 is "-95 dBm", a difference between the two RSRPs is "10 dBm", and the RSRPs "-85 dBm" and "-95 dBm" corresponding to the beam 2 are larger in all RSRPs, that is, signal strength or quality corresponding to the beam 2 is better. Therefore, the terminal device may determine that both the directional antenna 1 and the directional antenna 2 correspond to the beam 2. The mapping relationship 1 may include a correspondence between the directional antenna 1 and the directional antenna 2, and the beam 2.

S903: The terminal device communicates with the camped satellite based on the mapping relationship 1.

Optionally, the terminal device may communicate with the camped satellite by using one or more directional antennas. For example, when the mapping relationship 1 includes only a correspondence between one directional antenna and a beam of the camped satellite, the terminal device may communicate with the camped satellite by using only one directional antenna. When the mapping relationship 1 includes a correspondence between a plurality of directional antennas and a beam of the camped satellite, the terminal device may communicate with the camped satellite by using all the plurality of directional antennas.

Optionally, the terminal device may separately communicate with the different beams of the camped satellite by using all the plurality of directional antennas, or may communicate with a same beam of the camped satellite by using all the plurality of directional antennas. In a specific embodiment, if the mapping relationship 1 includes a correspondence between a plurality of directional antennas and a same beam, and for the beam, a difference of results between the plurality of directional antennas is less than or equal to the preset threshold, the terminal device may receive a signal, for example, including but not limited to a business signal, from the beam by using all the plurality of directional antennas. In this way, all the plurality of directional antennas are used to receive a signal from the camped satellite, thereby improving received signal quality.

In some embodiments, the terminal device may determine, based on a currently used directional antenna, a beam of the camped satellite communicating with the currently used directional antenna, and the mapping relationship 1, whether to switch the currently used directional antenna and/or the beam of the camped satellite needing to perform communication.

In some examples, if both the directional antenna currently used by the terminal device and the beam communicating with the currently used directional antenna are not included in the mapping relationship 1, the terminal device may switch, to those included in the mapping relationship 1, the used directional antenna and the beam that communicates with the directional antenna. For example, if the terminal device currently communicates with the beam 1 of the camped satellite by using the directional antenna 2, but the mapping relationship 1 includes a correspondence between the directional antenna 1 and the beam 2 of the camped satellite, the terminal device switches to communicate with the beam 2 of the camped satellite by using the directional antenna 1.

In some other examples, if the directional antenna currently used by the terminal device or the beam communicating with the currently used directional antenna is included in the mapping relationship 1, that is, only one of the currently used directional antenna and the beam is included in the mapping relationship 1, the terminal device may also correspondingly switch the other of the currently used directional antenna and the beam to that included in the mapping relationship 1. For example, if the terminal device currently communicates with the beam 3 of the camped satellite by using the directional antenna 1, but the mapping relationship 1 includes a correspondence between the directional antenna 1 and the beam 2 of the camped satellite, the terminal device switches to communicate with the beam 2 of the camped satellite by using the directional antenna 1. For another example, if the terminal device currently communicates with the beam 2 of the camped satellite by using the directional antenna 2, but the mapping relationship 1 includes a correspondence between the directional antenna 1 and the beam 2 of the camped satellite, the terminal device switches to communicate with the beam 2 of the camped satellite by using the directional antenna 1. For another example, if the terminal device currently communicates with the beam 1 of the camped satellite by using the directional antenna 1, but the mapping relationship 1 includes a correspondence between the directional antenna 1 and the directional antenna 2, and the beam 2, the terminal device switches to communicate with the beam 2 of the camped satellite by using the directional antenna 1 and the directional antenna 2.

In some other embodiments, if the directional antenna currently used by the terminal device and the beam of the camped satellite are the same as those in the mapping relationship 1, the terminal device may not switch the currently used directional antenna and the beam used for communication.

Optionally, the terminal device may perform the solution shown in FIG. 9b in real time or periodically. At different moments, the mapping relationship 1 may vary. In this way, it can be ensured that the directional antenna currently used by the terminal device and the corresponding beam of the satellite are a communication link with good communication quality, thereby ensuring good quality of communication with the satellite.

### Scenario 3: a scenario in which the terminal device is handed over to a to-be-camped satellite

Due to motion of a camped satellite, the terminal device, or the like, or another reason, the terminal device may need to be handed over to the to-be-camped satellite. To be specific, another satellite provides a communication service for the terminal device. For example, FIG. 10a is a diagram of a scenario in which a terminal device is handed over to a to-be-camped satellite according to an embodiment of this application. As shown in FIG. 10a, a satellite 1 is an original camped satellite of the terminal device, and a satellite 2 is a new to-be-camped satellite, namely, a to-be-handed-over-to communication satellite. The terminal device disconnects a communication connection from the satellite 1, and establishes a communication connection to the satellite 2.

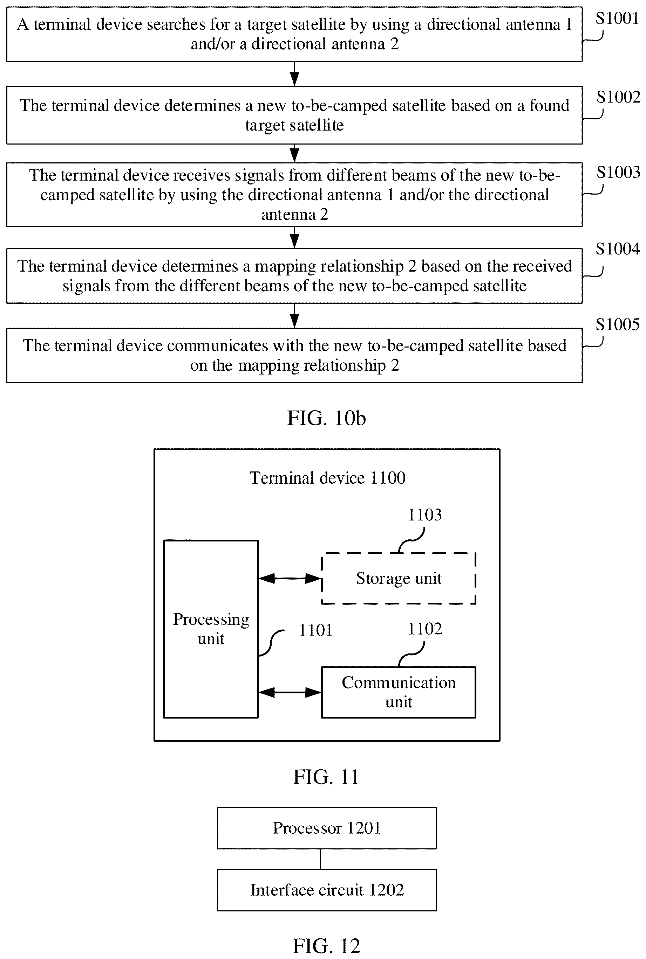

In this scenario, FIG. 10b is a schematic flowchart of another satellite communication method according to an embodiment of this application. For example, as shown in FIG. 10b, the method includes the following steps.

S1001: The terminal device searches for a target satellite by using the directional antenna 1 and/or the directional antenna 2.

Optionally, there may be one or more target satellites, and the target satellite may be a neighboring satellite of the original camped satellite (referred to as a source satellite for short below). Optionally, the one or more target satellites may include a satellite that is the same as or completely different from the satellite in step S501.

Similar to the process of searching for the source satellite in FIG. 5, in some scenarios, before the terminal device searches for the target satellite, the terminal device may also obtain an ephemeris of the target satellite. For example, the terminal device may receive the ephemeris of the target satellite from the source satellite, or the terminal device may obtain the ephemeris of the target satellite in the foregoing manner. In some other scenarios, before the terminal device searches for the target satellite, the terminal device may not obtain the ephemeris of the target satellite either. For implementations of how the terminal device searches for the target satellite in the two scenarios, refer to related implementations of step S501 shown in FIG. 5.

S1002: The terminal device determines a new to-be-camped satellite based on a found target satellite.

In some embodiments, when the terminal device finds a plurality of target satellites, the terminal device may use one of the found target satellites as the new to-be-camped satellite. For an implementation of which target satellite is specifically used by the terminal device as the new to-be-camped satellite, refer to a related implementation of step S502 shown in FIG. 5.

In some embodiments, after the terminal device performs step S1001, the terminal device may further determine a correspondence between a directional antenna of the terminal device and the new to-be-camped satellite. For a specific implementation, refer to a related implementation of step S503 shown in FIG. 5.

S1003: The terminal device receives signals from different beams of the new to-be-camped satellite by using the directional antenna 1 and/or the directional antenna 2.

In some embodiments, the terminal device may determine, based on a correspondence between the source satellite and a directional antenna and the correspondence between the new to-be-camped satellite and a directional antenna, which directional antenna is used to receive the signals from the different beams of the new to-be-camped satellite.

Optionally, the correspondence between the source satellite and a directional antenna may be the correspondence in step S503 in FIG. 5, or may be the foregoing mapping relationship 1. In some embodiments, before performing step S1003, the terminal device may first obtain the correspondence between the source satellite and a directional antenna and the correspondence between the new to-be-camped satellite and a directional antenna.

If a directional antenna corresponding to the source satellite and a directional antenna corresponding to the new to-be-camped satellite are completely different, the corresponding directional antennas do not overlap. For example, if the source satellite corresponds to the directional antenna 1, and the new to-be-camped satellite corresponds to the directional antenna 2, when communicating (for example, receiving and sending business data) with the source satellite by using the directional antenna (for example, the directional antenna 1) corresponding to the source satellite, the terminal device may receive the signals from the different beams of the to-be-camped satellite by using the directional antenna (for example, the directional antenna 2) corresponding to the new to-be-camped satellite, that is, perform beam measurement. In this way, the terminal device receive and send the business data by using the dedicated directional antenna. In a handover scenario, this can reduce a probability that a business is interrupted or affected, and ensure that the business on the terminal device can obtain good quality of service.

If the directional antenna corresponding to the source satellite and the directional antenna corresponding to the new to-be-camped satellite are completely the same, for example, if the source satellite corresponds to the directional antenna 1, and the new to-be-camped satellite also corresponds to the directional antenna 1, the terminal device may receive the signals from the different beams of the new to-be-camped satellite by using a part or all of directional antennas. The part or all of the directional antennas may include the directional antenna corresponding to the new to-be-camped satellite, or may not include the directional antenna corresponding to the new to-be-camped satellite.

Optionally, in this embodiment of this application, when the terminal device receives the signals from the different beams of the new to-be-camped satellite by using the directional antenna that is the same as that of the source satellite, the terminal device may separately receive, in a time division manner, namely, in different time periods, the signals from the different beams of the new to-be-camped satellite and communicate with the source satellite by using the same directional antenna. For example, in a time period 1, the terminal device may receive the signals from the different beams of the new to-be-camped satellite by using the directional antenna 1, and in a time period 2, the terminal device may communicate with the source satellite by using the directional antenna 1. The time period 1 and the time period 2 are different time periods.

If a directional antenna corresponding to the source satellite and a directional antenna corresponding to the new to-be-camped satellite are partially the same and partially different, the corresponding directional antennas overlap. For example, the source satellite corresponds to the directional antenna 1 and the directional antenna 2, and the new to-be-camped satellite corresponds to the directional antenna 1. For another example, the source satellite corresponds to the directional antenna 1, and the new to-be-camped satellite corresponds to the directional antenna 1 and the directional antenna 2. For another example, the source satellite corresponds to the directional antenna 1 and the directional antenna 2, and the new to-be-camped satellite corresponds to the directional antenna 2 and a directional antenna 3.

In a possible implementation, the terminal device may use the foregoing solution in which the directional antenna corresponding to the source satellite and the directional antenna corresponding to the new to-be-camped satellite are completely different. To be specific, the terminal device may separately communicate with the source satellite and the new to-be-camped satellite by using different directional antennas. In another possible implementation, the terminal device may alternatively use the foregoing solution in which the directional antenna corresponding to the source satellite and the directional antenna corresponding to the new to-be-camped satellite are completely the same. To be specific, the terminal device may receive the signals from the different beams of the to-be-camped satellite by using the part or all of the directional antennas.

In some other embodiments, the terminal device may alternatively directly use a related implementation of step S901 shown in FIG. 9b.

S 1004: The terminal device determines a mapping relationship 2 based on the received signals from the different beams of the new to-be-camped satellite.

The mapping relationship 2 may be a correspondence between a directional antenna of the terminal device and a beam of the new to-be-camped satellite. Optionally, the mapping relationship 2 may alternatively include a correspondence between one or more directional antennas of the terminal device and a beam of the new to-be-camped satellite. Optionally, the mapping relationship 2 may alternatively include a correspondence between all or a part of the directional antennas of the terminal device and a beam of the new to-be-camped satellite.

For a specific implementation of step S1004, refer to a related implementation of step S902 shown in FIG. 9b.

S1005: The terminal device communicates with the new to-be-camped satellite based on the mapping relationship 2.

In some embodiments, before the terminal device performs step S1005, the terminal device may disconnect the communication connection from the source satellite, and establish the communication connection to the new to-be-camped satellite.

Optionally, the terminal device may communicate with the new to-be-camped satellite by using one or more directional antennas. For example, when the mapping relationship 2 includes only a correspondence between one directional antenna and a beam of the new to-be-camped satellite, the terminal device may communicate with the new to-be-camped satellite by using only one directional antenna. When the mapping relationship includes a correspondence between a plurality of directional antennas and a beam of the new to-be-camped satellite, the terminal device may communicate with the new to-be-camped satellite by using all the plurality of directional antennas.

Optionally, the terminal device may separately communicate with the different beams of the new to-be-camped satellite by using all the plurality of directional antennas, or may communicate with a same beam of the new to-be-camped satellite by using all the plurality of directional antennas.

Subsequently, for another implementation of communication with the new to-be-camped satellite, refer to a related implementation of a communication process with the source satellite.

The foregoing mainly describes the solutions provided in embodiments of this application from the perspective of the methods. It may be understood that, to implement the foregoing functions, the terminal device includes corresponding hardware structures and/or software modules for performing the functions. With reference to the units and algorithm steps in the examples described in embodiments disclosed in this application, embodiments of this application can be implemented in a form of hardware or a combination of the hardware and computer software. Whether a function is performed by hardware or hardware driven by a computer depends on particular applications and design constraints of the technical solutions. A person skilled in the art may use different methods to implement the described functions for each particular application, but it should not be considered that the implementation goes beyond the scope of the technical solutions in embodiments of this application. In embodiments of this application, the terminal device may be divided into functional modules based on the foregoing method examples. For example, each functional module may be obtained through division based on each corresponding function, or two or more functions may be integrated into one processing unit. The integrated unit may be implemented in a form of hardware, or may be implemented in a form of a software functional module. It should be noted that, in embodiments of this application, division into the units is an example, is merely logical function division, and may be other division during actual implementation.

FIG. 11 is a diagram of a structure of a terminal device 1100 according to an embodiment of this application. The terminal device 1100 may be configured to implement the methods recorded in the foregoing method embodiments. For example, the terminal device 1100 may specifically include a processing unit 1101 and a communication unit 1102. The processing unit 1101 is configured to support the terminal device 1100 in performing the processing function performed by the terminal device in any one of FIG. 1 to FIG. 10b. The communication unit 1102 is configured to support the terminal device 1100 in performing the communication functions performed by the terminal device in any one of FIG. 1 to FIG. 10b.

Optionally, the terminal device 1100 shown in FIG. 11 may further include a storage unit 1103. The storage unit 1103 stores a program or instructions. When the processing unit 1101 executes the program or the instruction, the terminal device 1100 shown in FIG. 11 is enabled to perform the methods shown in the foregoing method embodiments.

Optionally, the terminal device 1100 shown in FIG. 11 may further include a display unit (not shown in the figure). The display unit may be configured to support the terminal device 1100 in performing various display operations.

For technical effect of the terminal device 1100 shown in FIG. 11, refer to technical effects of the methods in the foregoing method embodiments. Details are not described herein again. The processing unit 1101 in the terminal device 1100 shown in FIG. 11 may be implemented by a processor or a processor-related circuit component, and may be a processor or a processing module. The communication unit 1102 may be implemented by a transceiver or a transceiver-related circuit component, and may be a transceiver or a transceiver module.

An embodiment of this application further provides a chip system. As shown in FIG. 12, the chip system includes at least one processor 1201 and at least one interface circuit 1202. The processor 1201 and the interface circuit 1202 may be interconnected via a line. For example, the interface circuit 1202 may be configured to receive a signal from another apparatus. For another example, the interface circuit 1202 may be configured to send a signal to another apparatus (for example, the processor 1201). For example, the interface circuit 1202 may read instructions stored in a memory, and send the instructions to the processor 1201. When the instructions are executed by the processor 1201, a terminal device is enabled to perform the steps performed by the terminal device in the foregoing embodiments. Certainly, the chip system may further include another discrete device. This is not specifically limited in embodiments of this application.

Optionally, there may be one or more processors in the chip system. The processor may be implemented by hardware, or may be implemented by software. When being implemented by the hardware, the processor may be a logic circuit, an integrated circuit, or the like. When being implemented by the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be respectively disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

It should be understood that the steps in the foregoing method embodiments may be completed via an integrated logic circuit of hardware in the processor or instructions in a form of software. The steps of the methods disclosed with reference to embodiments of this application may be directly performed by a hardware processor, or may be performed by a combination of the hardware in the processor and a software module.

An embodiment of this application further provides a computer storage medium. The computer storage medium stores computer instructions. When the computer instructions are run on a terminal device, the terminal device is enabled to perform the methods in the foregoing method embodiments.

An embodiment of this application provides a computer program product. The computer program product includes a computer program or instructions. When the computer program or the instructions are run on a computer, the computer is enabled to perform the methods in the foregoing method embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the apparatus to perform the methods in the foregoing method embodiments.

An embodiment of this application further provides a communication system, including a terminal device and a network device. The terminal device and the network device implement the methods in embodiments of this application through interaction. For example, the network device may include but is not limited to a satellite. The terminal device, the computer storage medium, the communication system, the computer program product, or the chip provided in this embodiment is configured to perform the corresponding methods provided above. Therefore, for beneficial effect that can be achieved by the terminal device, the computer storage medium, the communication system, the computer program product, or the chip, refer to beneficial effect in the corresponding methods provided above. Details are not described herein again.

Based on descriptions of the foregoing implementations, a person skilled in the art may understand that, for convenience and brevity of description, division into the foregoing functional modules is merely used as an example for description. During actual application, the foregoing functions may be allocated to different functional modules for implementation based on a requirement. In other words, an inner structure of an apparatus is divided into different functional modules to implement all or a part of the functions described above.

In the several embodiments provided in this application, it should be understood that the disclosed apparatus and method may be implemented in other manners. When no conflict occurs, embodiments may be combined or referenced with each other. The described apparatus embodiments are merely examples. For example, division into the modules or the units is merely logical function division, and may be other division during actual implementation. For example, a plurality of units or components may be combined or integrated into another apparatus, or some features may be ignored or not performed. In addition, the displayed or discussed mutual couplings, direct couplings, or communication connections may be implemented via some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed in different places. A part or all of the units may be selected based on an actual requirement, to achieve the objectives of the solutions in embodiments. In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

The integrated unit may be stored in a readable storage medium when being implemented in the form of the software functional unit and sold or used as an independent product. Based on such an understanding, the technical solutions in embodiments of this application essentially, or the part contributing to the conventional technology, or all or a part of the technical solutions may be implemented in a form of a software product. The software product is stored in a storage medium, and includes several instructions for instructing a device (which may be a single-chip microcomputer, a chip or the like) or a processor (processor) to perform all or a part of the steps of the methods described in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

The foregoing content is merely specific implementations of this application, but is not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A satellite communication method, applied to a terminal device comprising a first directional antenna and a second directional antenna, wherein the first directional antenna corresponds to first coverage, the second directional antenna corresponds to second coverage, and the method comprises:
searching, by the terminal device, for at least one first satellite in a first range by using a first antenna, wherein
the first antenna is the first directional antenna, and the first range is the first coverage; or
the first antenna is the second directional antenna, and the first range is the second coverage; or
the first antenna is the first directional antenna and the second directional antenna, and the first range is the first coverage and the second coverage.

2. The method according to claim 1, wherein the first antenna is the first directional antenna, and the first range is the first coverage; and
searching, by the terminal device, for the at least one first satellite in the first range by using the first antenna comprises:
obtaining, by the terminal device, a location of the at least one first satellite; and
when determining, based on the location of the at least one first satellite and a location of the terminal device, that the at least one first satellite is in the first coverage, searching, by the terminal device, for the at least one first satellite by using the first directional antenna.

3. The method according to claim 2, wherein determining, based on the location of the at least one first satellite and the location of the terminal device, that the at least one first satellite is in the first coverage comprises:
determining, by the terminal device, an elevation angle from the terminal device to the at least one first satellite based on the location of the at least one first satellite and the location of the terminal device; and
when the elevation angle from the terminal device to the at least one first satellite is within the first coverage and is not within the second coverage, determining, by the terminal device, that the at least one first satellite is in the first coverage.

4. The method according to claim 1, wherein the first antenna is the second directional antenna, and the first range is the second coverage; and
searching, by the terminal device, for the at least one first satellite in the first range by using the first antenna comprises:
obtaining, by the terminal device, a location of the at least one first satellite; and
when determining, based on the location of the at least one first satellite and a location of the terminal device, that the at least one first satellite is in the second coverage, searching, by the terminal device, for the at least one first satellite by using the second directional antenna.

5. The method according to claim 4, wherein determining, based on the location of the at least one first satellite and the location of the terminal device, that the at least one first satellite is in the second coverage comprises:
determining, by the terminal device, an elevation angle from the terminal device to the at least one first satellite based on the location of the at least one first satellite and the location of the terminal device; and
when the elevation angle from the terminal device to the at least one first satellite is not within the first coverage and is within the second coverage, determining, by the terminal device, that the at least one first satellite is in the second coverage.

6. The method according to claim 1, wherein the first antenna is the first directional antenna and the second directional antenna, and the first range is the first coverage and the second coverage; and
searching, by the terminal device, for the at least one first satellite in the first range by using the first antenna comprises:
obtaining, by the terminal device, a location of the at least one first satellite; and
when determining, based on the location of the at least one first satellite and a location of the terminal device, that the at least one first satellite is in both the first coverage and the second coverage, searching, by the terminal device, for the at least one first satellite by using both the first directional antenna and the second directional antenna.

7. The method according to claim 6, wherein determining, based on the location of the at least one first satellite and the location of the terminal device, that the at least one first satellite is in both the first coverage and the second coverage comprises:
determining, by the terminal device, an elevation angle from the terminal device to the at least one first satellite based on the location of the at least one first satellite and the location of the terminal device; and
when the elevation angle from the terminal device to the at least one first satellite is within the first coverage and is within the second coverage, determining, by the terminal device, that the at least one first satellite is in both the first coverage and the second coverage.

8. The method according to any one of claims 2 to 7, wherein obtaining, by the terminal device, the location of the at least one first satellite comprises:
obtaining, by the terminal device, an ephemeris of the at least one first satellite; and
determining, by the terminal device, the location of the at least one first satellite based on the location of the terminal device, a time corresponding to the location of the terminal device, and the ephemeris of the at least one first satellite.

9. The method according to any one of claims 1 to 8, wherein after searching, by the terminal device, for the at least one first satellite in the first range by using the first antenna, the method further comprises:
determining, by the terminal device, a first to-be-camped satellite based on a preset camping condition, wherein the first to-be-camped satellite is one satellite in the at least one first satellite; and
communicating, by the terminal device, with the first to-be-camped satellite by using the first directional antenna and/or the second directional antenna.

10. The method according to claim 9, wherein communicating, by the terminal device, with the first to-be-camped satellite by using the first directional antenna and/or the second directional antenna comprises:
separately receiving, by the terminal device, signals from a plurality of beams of the first to-be-camped satellite by using the first directional antenna and the second directional antenna;
determining, by the terminal device, received signal quality, wherein the received signal quality is quality of the signals separately received by the first directional antenna and the second directional antenna from the plurality of beams of the first to-be-camped satellite;
determining, by the terminal device, a second antenna and a first beam based on the received signal quality, wherein the second antenna is one or more of the first directional antenna and the second directional antenna, and the first beam is one or more of the plurality of beams of the first to-be-camped satellite; and
communicating, by the terminal device, with the first beam by using the second antenna.

11. The method according to claim 10, wherein quality of a signal received by the second antenna from the first beam meets a preset quality condition, and the preset quality condition comprises optimal received signal quality.

12. The method according to claim 11, wherein the second antenna comprises the first directional antenna and the second directional antenna, a difference between quality of a signal received by the first directional antenna from the first beam and quality of a signal received by the second directional antenna from the first beam is less than or equal to a preset threshold, and the quality of the signal received by the first directional antenna or the second directional antenna from the first beam meets the preset quality condition.

13. The method according to claim 12, wherein communicating, by the terminal device, with the first beam by using the second antenna comprises:
simultaneously receiving, by the terminal device, the signals from the first beam by using the first directional antenna and the second directional antenna.

14. The method according to any one of claims 9 to 13, wherein after communicating, by the terminal device, with the first to-be-camped satellite by using the first directional antenna and/or the second directional antenna, the method further comprises:
searching, by the terminal device, for at least one second satellite in a second range by using a third antenna, wherein
the third antenna is the first directional antenna, and the second range is the first coverage; or
the third antenna is the second directional antenna, and the second range is the second coverage; or
the third antenna is the first directional antenna and the second directional antenna, and the second range is the first coverage and the second coverage.

15. The method according to claim 14, wherein
when the at least one second satellite is in the first coverage, the third antenna is the first directional antenna, and the second range is the first coverage; or
when the at least one second satellite is in the second coverage, the third antenna is the second directional antenna, and the second range is the second coverage; or
when the at least one second satellite is in both the first coverage and the second coverage, the third antenna is the first directional antenna and the second directional antenna, and the second range is the first coverage and the second coverage.

16. The method according to claim 14 or 15, wherein after searching, by the terminal device, for the at least one second satellite in the second range by using the third antenna, the method further comprises:
determining, by the terminal device, a second to-be-camped satellite based on the preset camping condition, wherein the second to-be-camped satellite is one satellite in the at least one second satellite.

17. The method according to claim 16, wherein after determining, by the terminal device, the second to-be-camped satellite based on the preset camping condition, the method further comprises:
receiving, by the terminal device, signals from a plurality of beams of the second to-be-camped satellite by using the first directional antenna and/or the second directional antenna.

18. The method according to claim 17, wherein receiving, by the terminal device, the signals from the plurality of beams of the second to-be-camped satellite by using the first directional antenna and/or the second directional antenna comprises:
when the terminal device determines that directional antennas corresponding to the first to-be-camped satellite and the second to-be-camped satellite are different, communicating, by the terminal device, with the first to-be-camped satellite by using the directional antenna corresponding to the first to-be-camped satellite, and receiving the signals from the plurality of beams of the second to-be-camped satellite by using the directional antenna corresponding to the second to-be-camped satellite, wherein
the directional antenna corresponding to the first to-be-camped satellite is the first directional antenna, and the directional antenna corresponding to the second to-be-camped satellite is the second directional antenna; or the directional antenna corresponding to the first to-be-camped satellite is the second directional antenna, and the directional antenna corresponding to the second to-be-camped satellite is the first directional antenna.

19. The method according to claim 17, wherein receiving, by the terminal device, the signals from the plurality of beams of the second to-be-camped satellite by using the first directional antenna and/or the second directional antenna comprises:
when the terminal device determines that the first to-be-camped satellite and the second to-be-camped satellite correspond to a same directional antenna, receiving, by the terminal device, the signals from the plurality of beams of the second to-be-camped satellite by using the first directional antenna and the second directional antenna, wherein
both a directional antenna corresponding to the first to-be-camped satellite and a directional antenna corresponding to the second to-be-camped satellite comprise the first directional antenna and/or the second directional antenna.

20. The method according to any one of claims 1 to 19, wherein the first coverage is coverage corresponding to the first directional antenna when the terminal device is in a current posture; and the second coverage is coverage corresponding to the second directional antenna when the terminal device is in the current posture.

21. A terminal device, comprising a processor, a memory, and a communication interface, wherein the memory and the communication interface are coupled to the processor, the communication interface is configured to communicate with another device, the memory is configured to store program code, the program code comprises instructions, and the processor reads the instructions from the memory, to enable the terminal device to perform the method according to any one of claims 1 to 20.

22. A computer-readable storage medium, wherein the computer-readable storage medium comprises a computer program, and when the computer program is run on a terminal device, the terminal device is enabled to perform the method according to any one of claims 1 to 20.

23. A computer program product, wherein the computer program product comprises a computer program or instructions, and when the computer program or the instructions are run on a computer, the computer is enabled to perform the method according to any one of claims 1 to 20.
